# EUROPÄISCHE PATENTSCHRIFT

(11) **EP 3 034 323 B1**
(45) Veröffentlichungstag und Bekanntmachung des Hinweises auf die Patenterteilung: **08.03.2017**
(21) Anmeldenummer: 14198361.9
(22) Anmeldetag: 16.12.2014
(51) Int. Cl.: B66F 9/075, B62D 21/14, B60B 19/00, B60B 33/06, B62D 49/06

(54) **Mecanumradfahrzeug sowie Betriebsverfahren**
Mecanum wheel vehicle and method of operation
Véhicule à roue mécanum et procédé de fonctionnement

(43) Veröffentlichungstag der Anmeldung: 22.06.2016
(73) Patentinhaber: Omniroll AG, 4512 Bellach (CH)
(72) Erfinder: Zdrahal, Pavel, 8330 Pfäffikon (CH); Uebelhart, Baudouin, 4515 Oberdorf (CH)
(74) Vertreter: Wagner, Kilian

(56) Entgegenhaltungen:
- WO-A1-2013/041310
- CN-A- 102 963 454
- CN-A- 103 303 391
- CN-A- 104 149 857
- CN-U- 203 486 852
- DE-A1-102007 016 662
- DE-A1-102010 050 907
- JP-A- 2010 076 630
- US-A- 5 213 176
- US-A1- 2003 066 693
- US-A1- 2013 068 543

## Beschreibung

Die Erfindung betrifft ein Mecanumradfahrzeug, insbesondere zum transportieren einer Zuladung, gemäß dem Oberbegriff des Anspruchs 1, mit einem sich entlang einer Längsachse und einer senkrecht dazu orientierten Breitachse erstreckenden Fahrgestell mit mindestens vier Mecanumradantrieben (allgemein: Mecanumradantriebsmittel), die über Steuermittel zur Realisierung eines omnidirektionalen Betriebs des Mecanumradfahrzeuges ansteuerbar sind. Ferner betrifft die Erfindung ein Verfahren zum Betreiben eines solchen Fahrzeugs gemäß dem Oberbegriff des Anspruchs 16.

Mecanumradfahrzeuge sind allgemein bekannt. Bei einem Mecanumrad sind über den Umfang einer Felge des Rades mehrere drehbar gelagerte, in der Regel tonnenförmige Rollen unter einem Winkel zur Drehachse der Felge, von meist 45° drehbar angebracht. Nicht die Felge, sondern ausschließlich die vorgenannten Rollen stellen den Kontakt zum Untergrund her. Die Rollen haben dabei keinen direkten Antrieb und können sich frei um ihre jeweilige Rollendrehachse (welche sich winklig zur Felgen- bzw. Mecanumraddrehachse erstreckt) drehen. Das gesamte Mecanumrad kann dagegen von einem Antrieb, in der Regel einem Elektromotor mit veränderlichem Drehsinn und variabler Drehzahl angetrieben werden. Bekannte Mecanumradfahrzeuge haben üblicherweise vier Räder, die in einem Rechteck angeordnet sind. Durch eine entsprechende Ansteuerung der Antriebe der Mecanumräder kann durch eine individuelle Drehrichtungswahl der Mecanumräder gegenüber dem Untergrund (Fahrbahn) aus der Summe der Vektoren der einzelnen Mecanumräder eine Gesamtbewegungsrichtung für das Fahrzeug eingestellt werden, wobei beliebige Fahrzeugbewegungsrichtungen, d.h. ein omnidirektionaler Betrieb realisiert wird.

Aus der WO 2013/041310 A1 ist ein gegenüber bis dato bekannten Mecanumrädern verbessertes Mecanumrad beschrieben, welches sich dadurch auszeichnet, dass zwei, jeweils rotierbare Rollen tragende Felgen des Mecanumrades über Dämpfungsmittel miteinander verbunden sind, die eine gedämpfte Relativbewegung der Felgen zueinander zulassen, wodurch unkontrollierte Schwebezustände bisheriger Mecanumradfahrzeuge vermieden werden, die auf den Wechsel eines entlang der Rollen wandernden Abstützpunktes von Rolle zu Rolle beim Drehen der Felge zurückzuführen waren.

Mecanumradfahrzeuge für einen omnidirektionalen Betrieb, insbesondere mit den zuvor beschriebenen, verbesserten Mecanumrädern haben sich bewährt. Aufgrund des vergleichsweise komplexen Aufbaus von Mecanumrädern zu herkömmlichen, abrollenden Rädern ist die maximale Traglast von Mecanumrädern engen Grenzen unterworfen, wodurch sich Mecanumradfahrzeuge bisher nur bedingt zum Tragen von Lasten (Zuladungen) oder zum Antreiben besonders schwerer Fahrzeuge eignen.

Unabhängig von der begrenzten Traglastproblematik von Mecanumradfahrzeugen besteht bei Mecanumradfahrzeugen allgemein das Problem, dass diese Fahrzeuge eine an die üblicherweise zu transportierende Ladung angepasste Größe aufweisen müssen - insbesondere ist eine Fahrzeugbreite so ausgelegt, dass Kippmomente beim Transport einer Ladung minimiert werden und/oder dass die Fahrzeugdimensionen so ausgelegt sind, dass eine Zuladung aufgenommen werden kann - dies führt jedoch dazu, dass die Mecanumradfahrzeugbreite für Fahrten ohne oder mit Zuladung überdimensioniert ist. Vorgenannte Ausführungen gelten auch für die Mecanumradfahrzeuglänge. Die vorgenannte Überdimensionierung der Abmessungen für den Nicht-Ladungsbetrieb führt jedoch dazu, dass die Fahrzeuge große Parkflächen für die Zeiten der Nicht-Benutzung benötigen. Auch können aufgrund der Größe gewisse Positionen nicht angefahren werden.

Die US 2013/068543 A1 beschreibt ein Mecanumradfahrzeug und zwei Fahrgestellabschnitte, die relativ zu einer um eine Klappachse klappbar sind. Auch die US 2003/006693 A1 beschreibt ein Mecanumradfahrzeug mit klappbar relativ zueinander angeordneten Fahrgestellabschnitten. Die CN 104 149 857 A zeigt ein Mecanumradfahrzeug, bei deren eine Abstandsvariabilität von Fahrgestellabschnitten über Spindeltriebe realisiert sind.

Ausgehend von dem vorgenannten Stand der Technik, liegt der Erfindung daher die Aufgabe zugrunde ein Mecanumradfahrzeug anzugeben, welches eine gute Manövrierfähigkeit - je nach Anwendungsfall mit und/oder ohne Zuladung ermöglicht. Dabei sollen je nach Anwendungsfall Kippmomente während des Transportes einer Zuladung minimiert sein oder es soll die Möglichkeit gegeben sein, auch große Zuladungen problemlos aufnehmen zu können. Darüber hinaus soll das Mecanumradfahrzeug auf möglicht kleinen Parkflächen verstau- bzw. abstellbar sein. Ferner besteht die Aufgabe darin, ein optimiertes Betriebsverfahren für ein solches Mecanumradfahrzeug anzugeben.

Diese Aufgabe wird mit einem Mecanumradfahrzeug mit den Merkmalen des Anspruchs 1 gelöst, d.h. bei einem gattungsgemäßen Mecanumradfahrzeug dadurch, dass das Fahrgestell einen ersten Fahrgestellabschnitt mit mindestens zwei der Mecanumradantriebe des Mecanumradfahrzeugs und einen zweiten Fahrgestellabschnitt mit mindestens zwei der Mecanumradantriebe des Mecanumradfahrzeugs aufweist, wobei der erste und der zweiten Fahrgestellabschnitt entlang einer ersten Einstellachse benachbart sind, und dass der erste und der zweite Fahrgestellabschnitt abstandsvariabel mechanisch miteinander verbunden sind (derart, dass diese mechanische Verbindung auch bei den unterschiedlich eingestellten Abständen vorhanden ist bzw. beibehalten bleibt) und dass der Abstand zwischen dem ersten und zweiten Fahrgestellabschnitt entlang der ersten Einstellachse durch Ansteuerung von mindestens einem Mecanumantrieb des ersten Fahrgestellabschnitts und/oder von mindestens einem Mecanumantrieb des zweiten Fahrgestellabschnitts mittels der Steuermittel einstellbar ist. Anders ausgedrückt wird die Relativverstellung der Fahrgestellabschnitte durch Ansteuerung der Mecanumradantriebsmittel über die Steuermittel mit Hilfe der Mecanumradantriebsmittel aktuiert.

Hinsichtlich des Betriebsverfahrens wird die Aufgabe mit den Merkmalen des Anspruchs 16 gelöst, d.h. bei einem gattungsgemäßen Verfahren dadurch, dass der Abstand zwischen dem ersten und dem zweiten Fahrgestellabschnitt entlang der ersten Einstellachse durch Ansteuerung von mindestens einem der Mecanumradantriebe des ersten Fahrgestellabschnitts und/oder des zweiten Fahrgestellabschnitts mittels der Steuermittel eingestellt wird.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, das Fahrgestell mehrteilig auszubilden, und zwar derart, dass das Fahrgestell mindestens zwei Fahrgestellabschnitte aufweist, die jeweils zwei Mecanumradantriebe tragen und diese Fahrgestellabschnitte abstandsvariabel (mittelbar oder unmittelbar) mechanisch miteinander zu verbinden, d.h. derart, dass der Abstand zwischen den Fahrgestellabschnitten entlang einer Einstellachse unter Beibehaltung der mechanischen Verbindung, beispielsweise durch die Realisierung einer Teleskop- oder Schienenverbindung trotz einer Abstandsvariation erhalten bleibt. Erfindungsgemäß ist nun weiter vorgesehen, dass die Einstellung des Abstandes der vorgenannten, entlang der (ersten) Einstellachse benachbarten Fahrgestellabschnitte entlang der (ersten) Einstellachse durch eine entsprechende Ansteuerung der Mecanumantriebe der Fahrgestellabschnitte erfolgt, derart, dass eine die Fahrgestellabschnitte aufeinander zu oder von einander weg verstellenden Kraft erzeugt wird. Für den bevorzugten Fall, dass die vorgenannte Einstellachse in Richtung der Breitenerstreckung und damit bevorzugt parallel zu den Drehachsen der Mecanumräder der Mecanumantriebe verläuft ist es möglich, durch eine gegenläufige Rotation der Mecanumräder eines der Fahrzeugabschnitte und gleichzeitiges Bremsen bzw. Festhalten oder langsameres Verdrehen der Mecanumräder, insbesondere durch entsprechende Ansteuerung der zugehörigen Antriebe, des gegenüberliegenden Fahrgestellabschnittes den Abstand zwischen den Fahrgestellabschnitten zu vergrößern und damit das Fahrgestell insgesamt zu verbreitern. Zum Verschmälern, d.h. zum Verringern des Abstandes der Fahrgestellabschnitte können die Mecanumräder der Mecanumradantriebe eines der Fahrgestellabschnitte wiederum gegenläufig, jedoch dann mit jeweils entgegengesetzter Drehrichtung rotiert werden, während die Mecanumräder des gegenüberliegenden Fahrgestellabschnittes bevorzugt (jedoch nicht zwingend) festgehalten bzw. durch entsprechende Ansteuerung gebremst werden.

Soll alternativ beispielsweise die Fahrzeuglänge variiert werden, verläuft also die vorgenannte Einstellachse in Richtung der Fahrzeuglängsachse und damit bevorzugt senkrecht zu den Drehachsen der Mecanumräder der Mecanumradantriebe, sind die vorgenannten Fahrgestellabschnitte in der Fahrzeuglängsrichtung benachbart angeordnet. Zum Verlängern des Fahrzeugs, d.h. zur weiteren Beabstandung der Fahrgestellabschnitte voneinander können beispielsweise die an einem Fahrgestellabschnitt angeordneten Mecanumräder in eine gemeinsame Verdrehrichtung verdreht werden, während die Mecanumräder bzw. Mecanumradantriebe des benachbarten Fahrgestellabschnittes langsamer rotiert oder gebremst bzw. festgehalten werden. Auch ist es möglich, letztere Mecanumradantriebe gegensätzlich zu den anderen Mecanumradantrieben zu rotieren. Unabhängig von der konkreten Ansteuerung der Mecanumradantriebe muss diese jedenfalls so erfolgen, dass ein Kraftvektor resultiert, der die Fahrgestellabschnitte in die gewünschte Richtung entlang der Einstellachse relativ zueinander bewegt.

Ganz besonders bevorzugt ist eine später noch zu erläuternde Ausführungsform, bei der sowohl die Breite als auch die Länge des Fahrgestells durch entsprechende Ansteuerung von Mecanumradantrieben variiert wird, wobei die hierzu notwendigen Kräfte zumindest teilweise, vorzugsweise vollständig durch entsprechende Ansteuerung der Mecanumradantriebe erzeugt werden, die es im Gegensatz zu herkömmlichen Rädern ohne die Realisierung einer mechanischen Lenkung ermöglichen Kraftvektoren zu erzeugen, die winklig zur Längserstreckung des Fahrgestells orientiert sind. Wie diese Kraftvektoren durch entsprechende Ansteuerung erzeugt werden können ist grundsätzlich bekannt - erfindungsgemäß resultiert die entsprechende Ansteuerung in einer definierten Abstandsvariation von mindestens zwei jeweils zwei Mecanumradantriebe tragenden Fahrgestellabschnitten entlang einer Einstellachse, die in Richtung der Breitenerstreckung oder in Richtung der Längserstreckung des Fahrzeugs, d.h. insbesondere parallel zu den Drehachsen der Mecanumräder oder alternativ senkrecht dazu orientiert sein kann. Vorgenannte Orientierung der Drehachsen der Mecanumräder bzw. Mecanumradfelgen ist nicht zwingen, jedoch für eine vereinfachte Regel- bzw. Ansteuerbarkeit von Vorteil. So ist es beispielsweise möglich, die Drehachse zumindest eines Mecanumrads zumindest eines der Mecanumradantriebe sowohl winklig zur Längsachse des Fahrzeugs als auch winklig zur Breitenachse des Fahrzeugs anzuordnen, also unter jeweils einem von 90° abweichenden Winkel zu den vorgenannten Achsen. In diesem Fall verläuft die erste Einstellachse sowohl bei einer Breitenverstellbarkeit als auch bei einer Längenverstellbarkeit winklig zu der vorgenannten Mecanumraddrehachse - eine Abstandsvariation der in der Längsrichtung oder Breitenrichtung beabstandeten Fahrgestellabschnitte ist dann durch eine entsprechende Kraftvektorerzeugung mittels der Mecanumradantriebe trotzdem möglich und fällt in den Rahmen der Erfindung.

Das nach dem Konzept der Erfindung ausgebildete Mecanumradfahrzeug sowie das erfindungsgemäße Betriebsverfahren bieten vielfältige Vorteile gegenüber bekannten Mecanumradfahrzeugen und nutzen, insbesondere bei einer Breitenverstellbarkeit des Mecanumradfahrzeuges die speziellen Eigenschaften von Mecanumradantrieben, die jeweils mindestens ein Mecanumrad und mindestens ein Antriebsmotor, insbesondere einen elektrischen Antriebsmotor umfassen. So ist es, insbesondere allein durch eine entsprechende Ansteuerung der Mecanumräder bzw. Mecanumradantriebe möglich, die Fahrzeugbreite und/oder die Fahrzeuglänge zu variieren, wodurch das Mecanumradfahrzeug zum einen in einem Nicht-Zuladungsbetrieb, insbesondere zum Abstellen auf einer Parkfläche eine minimale Grundfläche einnehmen kann. Darüber hinaus ist es aufgrund der Größenvariabilität möglich Positionen anzufahren, die ansonsten bei einer maximalen Größe nicht anfahrbar wären. Ferner ist es erstmals möglich, das Fahrgestell an die Ladung, insbesondere die Ladungsgröße anzupassen, um beispielsweise unter unterschiedlich dimensionierte Ladungen, insbesondere Paletten fahren zu können oder sogar abschnittsweise seitlich an einer Ladung vorbei, um diese dann durch später noch zu erläuternde, bevorzugt vorgesehene Hebemittel aufzunehmen oder wieder abzuladen. Bei Bedarf ist es auch möglich, die Dimension so einzustellen, dass Kippmomente minimiert werden.

Wie erläutert, tragen die mindestens zwei relativ zueinander in der Einstellachse verstellbaren Fahrzeuggestellabschnitte jeweils zwei Mecanumradantriebe zum Erzeugen der Kraft zum Relativverstellen dieser Fahrgestellabschnitte. Jeder Mecanumradantrieb umfasst, wie erläutert, mindestens einen Antriebsmotor, insbesondere einen Elektromotor und mindestens ein bevorzugt ausschließlich um eine Drehachse, insbesondere die Antriebsdrehachse rotierbares Mecanumrad. Dieses ist im Gegensatz zu herkömmlichen Antriebsrädern bevorzugt nicht um eine senkrecht zur Drehachse orientierte Gelenkachse rotierbar. Ein Mecanumrad wiederum ist jeweils um eine Drehachse rotierbar und trägt zudem, über den Umfang verteilt angeordnete, bevorzugte tonnenförmige Rollen, über welche das Mecanumrad auf einem Untergrund abrollt, wobei die Rollendrehachsen der Rollen winklig zur jeweiligen Mecanumrad- bzw. Felgendrehachse des Mecanumrades angeordnet sind. In an sich bekannter Weise sind die Mecanumradantriebe einzeln oder in Gruppen zur Realisierung eines omnidirektionalen Betriebs des Fahrzeugs über Steuermittel ansteuerbar bzw. angesteuert, so dass die Mecanumräder oder Mecanumradgruppen mit individuellen Geschwindigkeiten oder Drehrichtungen rotierbar sind, wobei die gewünschte, bzw. vorgegebene (Gesamt- bzw. resultierende) Bewegungsrichtung des Mecanumfahrzeuges (oder Teilbewegungen bzw. Relativbewegungen von jeweils zwei Mecanumradantrieben tragenden Fahrgestellabschnitten zueinander) aus einer Summe von Einzelvektoren der Mecanumräder resultiert. Auf diese Weise kann trotz bevorzugt zum Verzicht auf eine mechanische Lenkung jede beliebige Bewegungsrichtung, d.h. ein omnidirektionaler Betrieb realisiert werden und es besteht die Möglichkeit zum Rotieren bzw. Wenden des gesamten Mecanumradfahrzeuges auf der Stelle und/oder während des Bewegens des Mecanumradfahrzeuges in einer gewünschten Bewegungsrichtung.

Bevorzugt wird auf zusätzliche Antriebe zu den Mecanumradantrieben zur Breiten- und/oder Längenverstellung des Fahrgestells verzichtet.

Im Hinblick auf die Realisierung der abstandsvariablen, mechanischen Fixierung gibt es unterschiedliche Möglichkeiten. Wesentlich ist, dass Fahrgestellabschnitte in unterschiedlichen Abständen entlang der Einstellachse mittelbar oder unmittelbar fest miteinander mechanisch verbunden sind bzw. bleiben. Im einfachsten Fall kann hierzu zwischen den entlang der Einstellachse relativ zu verstellenden Fahrgestellabschnitten eine mechanische Teleskopverbindung realisiert werden. Auch ist es denkbar einen der Fahrgestellabschnitte oder beide Fahrgestellabschnitte entlang einer Verbindungsschiene verstellbar anzuordnen, usw. Eine Möglichkeit besteht auch darin, dass die beiden Fahrgestellabschnitte (Verbindungsfahrgestellabschnitt) mittelbar über einen weiteren Fahrgestellabschnitt miteinander verbunden sind, beispielsweise jeweils über einen Teleskopauszug od. dgl. mechanische Verbindung und zur Abstandsvariation der Fahrgestellabschnitte zueinander der Abstand zumindest eines der Fahrgestellabschnitte zu diesen weiteren, insbesondere mittleren Verbindungsfahrgestellabschnitt durch Ansteuerung von Mecanumradantrieben veränderbar ist.

Wie eingangs erwähnt, ist es besonders bevorzugt, wenn zwei Fahrgestellabschnitte jeweils mit zwei Mecanumradantrieben, d.h. ein erster Fahrgestellabschnitt und ein zweiter Fahrgestellabschnitt entlang einer ersten Einstellachse durch entsprechende Ansteuerung von Mecanumradantrieben des Mecanumradfahrzeuges einstellbar ist. Dabei kann die erste Einstellachse in Fahrzeuglängsrichtung oder in Fahrzeugbreitenrichtung verlaufen. Besonders bevorzugt ist nun eine Ausführungsform, bei der zwei Fahrgestellabschnitte, nämlich ein dritter und ein vierter Fahrgestellabschnitt, die jeweils zwei Mecanumradantriebe des Fahrzeugs tragen, entlang einer zweiten Einstellachse durch entsprechende Ansteuerung von Mecanumradantrieben abstandsvariabel sind, wobei die zweite Einstellachse dann bevorzugt senkrecht zur ersten Einstellachse, d.h. in Längs- oder Breitenrichtung des Fahrzeugs verläuft. Der dritte und der vierte Fahrzeugabschnitt müssen im Rahmen der Abstandsvariabilität entlang der zweiten Einstellachse abstandsvariabel mechanisch miteinander (unmittelbar oder mittelbar) verbunden sein, wobei hier ebenfalls die zuvor beschriebenen Lösungen realisierbar sind.

Ganz besonders bevorzugt ist nun eine Ausführungsform, bei der der dritte und vierte Fahrgestellabschnitt jeweils von Teilfahrgestellabschnitten (Teilabschnitten) des ersten und zweiten Fahrgestellabschnittes gebildet sind, dass also bevorzugt vier Teilfahrgestellabschnitte existieren, die paarweise zu einem ersten und einem zweiten Fahrgestellabschnitt zur Abstandsvariation entlang der ersten Einstellachse und alternativ oder gleichzeitig paarweise zum dritten und vierten Fahrgestellabschnitt zur Abstandsvariation entlang der zweiten Einstellachse zusammenfassbar sind. Ganz besonders bevorzugt ist es dabei, wenn die Mecanumradantriebe des dritten und vierten Fahrgestellabschnittes diejenigen des ersten und zweiten Fahrgestellabschnittes sind, so dass beispielsweise der dritte Fahrgestellabschnitt einen Mecanumradantrieb des ersten Fahrzeugabschnittes und einen Mecanumradantrieb des zweiten Fahrgestellabschnittes trägt, ebenso wie der vierte Fahrgestellabschnitt. Ein solches Fahrzeug kommt mit insgesamt vier Mecanumradantriebe aus, wobei selbstverständlich zum Erzielen größerer Antriebsmomente auch mehr als vier Mecanumradantriebe vorgesehen und vorzugsweise auf die Fahrgestellabschnitte bzw. Fahrgestellteilabschnitte verteilt angeordnet sind.

Ein zuvor beschriebenes Mecanumrad ist maximal flexibel und sowohl in der Länge als auch in der Breite anpassbar, insbesondere ausschließlich durch entsprechende Ansteuerung der Mecanumradantriebe des Mecanumradfahrzeuges.

Bei einer Ausführungsform mit mindestens vier Fahrgestellteilabschnitten, die jeweils mindestens einen Mecanumradantrieb tragen und die paarweise zur Bildung des ersten und zweiten Fahrgestellabschnittes und paarweise zur Bildung des dritten und vierten Fahrgestellabschnittes zusammenfassbar sind, ist es möglich, sämtlich Teilfahrgestellabschnitte unmittelbar mechanisch abstandsvariabel miteinander oder mit einem weiteren, insbesondere mittleren, Verbindungsfahrgestellabschnitt zu verbinden. Ganz besonders bevorzugt ist jedoch eine Ausführungsform, bei der die vier Teilfahrgestellabschnitte U-förmig abstandsvariabel miteinander verbunden sind, derart, dass beispielsweise der erste und der zweite Fahrgestellabschnitt entlang der ersten Einstellachse lediglich über die Teilfahrgestellabschnitte des dritten oder alternativ des vierten Fahrgestellabschnittes miteinander verbunden sind, wobei diese, unmittelbar miteinander verbundenen oder über einen Verbindungsfahrgestellabschnitt mittelbar miteinander verbundenen Teilfahrgestellabschnitte entlang der zweiten Einstellachse mit jeweils einem Teilfahrgestellabschnitt des vierten oder alternativ des dritten Fahrgestellabschnittes verbunden sind. Es resultiert dann ein U-förmiger Aufbau.

Besonders zweckmäßig ist eine Ausführungsform des Mecanumradfahrzeuges, bei der dieses Hebemittel zum Verändern eines senkrecht zur Längsachse und zur Breitenachse orientierten Höhenabstandes zwischen einer, vorzugsweise von einer Hubgabel gebildeten, Auflagefläche für eine Zuladung und den Mecanumantrieben aufweist. Bevorzugt sind die Hebemittel so ausgebildet, dass mit diesen eine Zuladung, beispielsweise eine Palette angehoben werden kann.

Als besonders vorteilhaft hat sich nun eine Ausführungsform herausgestellt, bei der die Auflagefläche der Hebemittel, insbesondere eine zwei Gabelzinken aufweisende Hubgabel in der Art einer Gabelstaplergabel zwischen dem ersten und dem zweiten Fahrgestellabschnitt angeordnet ist, so dass durch Abstandsvariation des ersten und zweiten Fahrgestellabschnittes entlang der ersten Einstellachse eine Anpassung an eine aufzunehmende Zuladung möglich ist, insbesondere indem der erste und der zweite Fahrgestellabschnitt parallel zur Längserstreckung einer Hubgabel seitlich an der aufzuladenden Zuladung vorbeifahren und nach Aufnahme der Zuladung durch Betätigung der Hebemittel wieder ein Stück weit durch entsprechende Ansteuerung der Mecanumradantriebe zusammenfahrbar sind.

Für den Fall des Vorsehens eines zuvor bereits diskutierten Verbindungsfahrgestellabschnittes, mit welchem abstandsvariabel zwei gegenüberliegende Fahrgestellabschnitte, insbesondere der erste und der zweite Fahrgestellabschnitt mechanisch abstandsvariabel verbunden sind ist es bevorzugt, die Hebemittel an diesem Verbindungsabschnitt anzuordnen bzw. festzulegen.

Zur Realisierung einer erhöhten Tragkraft bzw. Zulademöglichkeit des Mecanumradfahrzeuges ist im Rahmen der Weiterbildung der Erfindung vorgesehen, dass zusätzlich zu den Mecanumrädern an dem Fahrgestell fixierte oder an einem an dem Fahrgestell beweglich gelagerten bzw. festgelegten, insbesondere höhenverstellbaren, Tragelement, Abstützmittel (nicht in der Form von Mecanumrädern) vorgesehen sind, um einen Gewichtskraftanteil, insbesondere einen Haupt-Gewichtskraftanteil eines des Fahrgestells des Mecanumradfahrzeuges und einer etwaigen Zuladung auf einem Untergrund (Fahrbahn) abzustützen. Gleichzeitig ist im Rahmen der Weiterbildung vorgesehen, den Anteil der Gewichtskraft des Fahrgestells und etwaiger Aufbauten und/oder einer etwaigen Zuladung, der über die Mecanumräder auf dem Untergrund abzustützen ist, zu begrenzen, um somit eine unzulässige Überlastung der Mecanumräder zu verhindern. Hierzu sind die Mecanumräder gegenüber dem Fahrgestell (parallel zur Gewichtskraftrichtung des Fahrzeugs und/oder einer Zuladung) federnd an dem Fahrgestell bzw. den Fahrgestellabschnitten fixiert, und zwar mit Hilfe von Kraftspeichermitteln, die so ausgebildet und angeordnet sind, dass nur eine Teilgewichtskraft einer Gesamtgewichtskraft von den Mecanumrädern auf dem Untergrund abzustützen ist - hierzu müssen die Kraftspeichermittel in vertikaler Richtung (d.h. parallel zur Gewichtskraftrichtung) und/oder senkrecht (zumindest mit einer Federkraftkomponente) zur Flächenerstreckung des Fahrgestells bzw. zu einer von den Mecanumrädern definierten Abstützebene zum Abstützen auf dem Untergrund federnd ausgebildet sein. Bevorzugt sind die Kraftspeichermittel dabei derart ausgebildet, dass der Federweg begrenzt ist, so dass ein Restfederweg (in der Gewichtskraftrichtung) bei sich auf dem Untergrund abstützenden Abstützmitteln verbleibt bzw. gegeben ist. Für den Fall, dass auch die Abstützmittel federnd gelagert werden sollen, was fakultativ möglich ist, ist die Federsteifigkeit der Kraftspeichermittel bevorzugt geringer zu wählen als eine Federsteifigkeit von fakultativen, bevorzugt zwischen den Abstützmitteln und dem Fahrgestell angeordneten Abstützkraftspeichermitteln, mit denen die Abstützmittel ggf. federnd gegenüber dem Fahrgestell gelagert sind.

Im Ergebnis wird im Rahmen der Weiterbildung ein Mecanumradfahrzeug erhalten, welches bei Beibehaltung einer seiner omnidirektionalen Betriebsweise durch eine entsprechende Ansteuerung der Mecanumräder bzw. von deren Antrieben ermöglicht und welches gleichzeitig in der Lage ist, eine vergleichsweise große Zuladung zu transportieren, da aufgrund einer entsprechenden federnden Lagerung der Mecanumräder gegenüber einem Fahrgestell und dem zusätzlichen Vorsehen von Abstützmitteln gewährleistet ist, dass lediglich ein Gewichtskraftanteil des Fahrgestells und/oder einer etwaigen Zuladung über die Mecanumräder auf dem Untergrund abgestützt ist, während der andere bzw. verbleibende Gewichtskraftanteil, insbesondere der größere Gewichtskraftanteil über die Abstützmittel auf dem Untergrund abstützbar ist. Hierzu befinden sich dann eine Abstützfläche der Abstützmittel und die Abstützfläche der Mecanumräder gemeinsam auf dem Untergrund, insbesondere in einer gemeinsamen Ebene (bei ideal planem Untergrund).

Bevorzugt ist dabei die Federkraft bzw. Federsteifigkeit der Kraftspeichermittel so auf das Gewicht des Fahrgestells, etwaiger Aufbauten und/oder einer etwaigen Zuladung, abgestimmt, dass trotz einer Begrenzung des über die Mecanumräder abzustützenden Gewichtskraftanteils ein noch ausreichender Gewichtskraftanteil über die Mecanumräder auf dem Untergrund abstützbar bzw. abgestützt ist, um eine (ausreichende) Traktion der Mecanumräder auf dem Untergrund zur Sicherstellung eines Vortriebes zum omnidirektionalen Bewegen des Mecanumradfahrzeuges zu gewährleisten. Insbesondere sollte sichergestellt sein, dass die Traktion ausreichend ist, um ein sogenanntes Anreißmoment, welches notwendig ist, um einen Anrollwiderstand des Fahrzeuges zu überwinden auf den Untergrund weitergegeben bzw. an diesem abgestützt werden kann.

Dabei bilden die Mecanumradantriebe, das Fahrgestell und die Abstützmittel eine untrennbare Einheit, die gemeinsam verfahrbar ist, bevorzugt für den Fall der nicht Zuladung einer Zuladung so, dass sich die Abstützmittel, wie später noch im Rahmen einer vorteilhaften Weiterbildung erläutert werden wird, nicht auf dem Untergrund abstützen. Neben einer grundsätzlichen Eignung des weiterbildungsgemäßen Mecanumradfahrzeugs zum Tragen von Zuladungen ist es aufgrund der Erfindung auch erstmals möglich, vergleichsweise schwere Mecanumradfahrzeuge, welche beispielsweise schwere, dauerhafte Aufbauten aufweisen zu konstruieren und die Gewichtskraft dieser Aufbauten nur teilweise über die Mecanumräder und zum anderen Teil über die Abstützmittel am Boden abzustützen. Ganz besonders bevorzugt ist ein im Rahmen der Erfindung realisierbarer Fahrzeugtyp, bei welchem auf dem Fahrgestell Hebemittel fixiert sind, mit denen eine Zuladung relativ zu dem Fahrgestell höhenverstellbar ist. Eine solche Ausführungsform ermöglich es, unter eine Zuladung zu fahren, die Zuladung relativ zu dem Fahrgestell mit Hilfe der Hebemittel höhenzuverstellen, so dass ein Teil von der Zuladungsgewichtskraft über die Abstützmittel auf dem Untergrund abgestützt wird und nur ein Teil der Gewichtskraft über die Mecanumräder, wobei dieser Gewichtskraftanteil ausreichend groß gewählt ist, um eine Traktion der Mecanumräder auf dem Untergrund zu gewährleisten.

Im Hinblick auf die konkrete Ausgestaltung der Abstützmittel gibt es unterschiedliche Möglichkeiten. Im einfachsten Fall ist es möglich, Abstützmittel durch Antreiben der Mecanumräder schleifend über den Untergrund zu bewegen. Besonders bevorzugt ist es jedoch, wenn sich die Abstützmittel zur Reibungsminimierung zusammen mit dem Fahrgestell durch Antreiben der Mecanumräder rollend über den Untergrund fortbewegend ausgebildet sind. Ganz besonders bevorzugt ist es dabei, wenn die Abstützmittel ein um eine, sich vorzugsweise parallel zu einem Untergrund erstreckende, Drehachse, bevorzugt um 360°, rotierbares Lastrad, insbesondere in Form einer Lastrolle aufweisen, welches bei einem Richtungswechsel des Fahrzeugs durch eine entsprechende Ansteuerung der Mecanumradantriebe um eine sich vorzugsweise senkrecht zur Drehachse des Lastrades erstreckenden Lenkachse relativ zu dem Fahrgestell rotierbar ist. Besonders zweckmäßig ist es, mehrere derartig ausgebildeter und gelenkig angeordneter Lasträder für eine verbesserte Lastverteilung vorzusehen. Ganz besonders bevorzugt sind vier, die Ecken eines Rechtecks begrenzende, Lasträder vorgesehen. Das mindestens eine Lastrad ist dabei bevorzugt als "herkömmliches Rad ohne zusätzliche, relativ zu dem Rad rotierbare Rollen", d.h. nicht als Mecanumrad ausgebildet und bevorzugt nicht aktiv, sondern nur mittelbar über die Mecanumräder angetrieben. Bevorzugt ist das mindestens eine Lastrad auch nicht aktiv um die Gelenkachse mittels eines Lenkantriebs rotierbar, sondern nur passiv durch einen entsprechenden Richtungswechsel des Fahrzeugs, wobei auch eine Ausführungsform mit aktiver, d.h. aktuierter Lenkung realisierbar ist, die in Abhängigkeit der Fahrzeugrichtung das Lastrad um eine Gelenkachse direkt angetrieben rotiert. Zusätzlich oder alternativ zu einem um eine Drehachse sowie um eine Gelenkachse rotierbaren Lastrad ist es auch denkbar, Abstützmittel in Form einer rotierbar, insbesondere in einem Käfig angeordneten Rolle vorzusehen, die omnidirektional rollen und somit einer von den Mecanumradantrieben vorgegebenen Fahrzeugrichtung folgen kann. Denkbar ist es grundsätzlich auch, Abstützmittel in Form einer rotierbaren Kette, in der Art eines Kettenfahrzeugs vorzusehen, wobei es in diesem Fall bevorzugt ist, eine aktive Lenkung zum Verschwenken eines derartigen Kettenantriebes (eine Kette kann hier auch aus einem gummielastischen Material ausgebildet sein) vorzusehen, um somit eine von der jeweiligen Fahrtrichtung des Mecanumrades abhängige Vorzugsausrichtung des Kettenantriebes einzustellen. Unabhängig von der konkreten Ausgestaltung der Abstützmittel sind diese bevorzugt jedoch nicht aktiv sondern nur mittelbar über die Mecanumradantriebe antreibbar.

Insbesondere bei einem Fahrzeug, welches zum Tragen bzw. transportieren einer Zuladung ausgebildet ist, hat es sich als vorteilhaft herausgestellt, die Kraftspeichermittel für die Mecanumräder derart auszubilden oder abzustellen, dass die Abstützmittel bei nicht mit einer Zuladung beaufschlagtem Fahrgestell, welches gegebenenfalls noch Aufbauten trägt, oberhalb einer von den Mecanumrädern definierten Abstützebene, sprich oberhalb des Untergrundes angeordnet sind, und sich erst bei Beaufschlagen mit einer dimensionierten bzw. schweren Zuladung bei gleichzeitiger bzw. automatischer Erhöhung der Federspannung der Kraftspeichermittel zusammen mit Fahrgestell, absenken. Mit anderen Worten ist eine Ausführungsform von besonderem Vorteil, bei der die Abstützmittel während einer Leerfahrt des Mecanumradfahrzeuges den Untergrund nicht kontaktieren, sondern erst bei Aufbringen einer entsprechenden Zuladung, welche gleichzeitig dafür sorgt, dass die Mittel, mit denen die Mecanumräder federnd gegenüber dem Fahrgestell gelagert sind, gespannt werden, wobei, wie bereits erläutert, selbst bei in der von den Mecanumrädern definierten Abstützebene befindlichen Abstützmitteln ein Restfederweg der Kraftspeichermittel parallel zur Gewichtskraftrichtung aufrecht erhalten bleiben sollte, insbesondere um Unebenheiten des Untergrundes ausgleichen zu können und um zu verhindern, dass eine zu große Last über die Mecanumräder abgestützt werden muss. Dies ist wichtig, um auch bei Unebenheiten des Untergrundes einen kontrollierten omnidirektionalen Vortrieb des Mecanumradfahrzeuges zu gewährleisten.

Als besonders vorteilhaft hat es sich herausgestellt, wenn die Abstützmittel höhenverstellbar an dem Fahrgestell angeordnet bzw. festgelegt sind, derart, dass ein Abstand zwischen einer von den Abstützmitteln gebildeten Abstützfläche, mit der sich die Abstützmittel zum Abstützen einer Teillast, d.h. eines Gewichtskraftanteils auf dem Untergrund abstützen und dem Untergrund bzw. der von den Mecanumrädern definierten Abstützebene und somit der Abstand der vorgenannten Abstützfläche zu dem Fahrgestell einstellbar ist, um den Federweg, den die Kraftspeichermittel beim Beladen des Fahrgestells mit einer Zuladung zurücklegen können, bis dass die Abstützfläche der Abstützmittel den Untergrund erreicht und/oder fakultative Abstützkraftspeichermittel entsprechend des Zuladungsgewichtes maximal gespannt sind, einstellen zu können. Durch diese Maßnahme wird gleichzeitig die maximale, von den Mecanumrädern auf den Untergrund abzustützende Gewichtskraft eingestellt. Wie später noch erläutert werden wird, folgt diese Abstandseinstellung bevorzugt in Abhängigkeit einer gemessenen Gewichtskraft der Zuladung.

Wie eingangs bereits angedeutet ist eine Ausführungsform realisierbar, bei welcher ausschließlich die Mecanumräder gegenüber dem Fahrgestell mit Hilfe der Kraftspeichermittel federnd zur Begrenzung der maximal zu tragenden bzw. abzustützenden Last gelagert sind und die Abstützmittel nicht. Alternativ ist es denkbar, nicht nur die Mecanumräder federnd gegenüber dem Fahrgestell zu lagern, sondern zusätzlich auch die Abstützmittel über Abstützkraftspeichermittel, wobei dann die Federsteifigkeit der Abstützkraftspeichermittel bevorzugt größer ist als die der Kraftspeichermittel, um somit sicherzustellen, dass nur ein Anteil der Gewichtskraft über die Mecanumräder auf dem Untergrund abgestützt wird bzw. abstützbar ist.

Besonders zweckmäßig ist es, wenn die Kraftspeichermittel derart ausgebildet sind, dass selbst bei mit einer Zuladung beaufschlagtem Mecanumradfahrzeug ein Restfederweg der Kraftspeichermittel parallel zur Gewichtskraftrichtung zur Gewährleistung eines Restfedervermögens verbleibt. Mit anderen Worten ist es bevorzugt, wenn der theoretisch bis zum Erreichen eines Anschlages maximal zurücklegbare Federweg parallel zur Gewichtskraftrichtung, d.h. die entsprechende Federwegkomponente, länger ist als der Abstand der Abstützfläche der Abstützmittel zum Untergrund bzw. zu der von den Mecanumrädern definierten Abstützebene in einem unbeladenen Zustand und/oder länger ist als ein maximaler Federweg fakultativer Abstützkraftspeichermittel parallel zu der vorgenannten Gewichtskraftrichtu ng.

Um bei unterschiedlichen Zuladungen eine ausreichende Traktion der Mecanumradantriebe bzw. der Mecanumräder auf dem Untergrund sicherzustellen, hat es sich als vorteilhaft herausgestellt, wenn Mittel zum Einstellen der Vorspannung der Kraftspeichermittel und/oder eines maximaler Federweges, den die Kraftspeichermittel unter Erhöhung der Federspannung zurücklegen können, bis die Abstützmittel auf dem Untergrund aufsetzen bzw. die von den Mecanumrädern definierte Abstützebene erreichen und/oder bis fakultative Abstützkraftspeichermittel entsprechend der Zuladung maximal gespannt sind, einstellbar ist und somit auch der maximal von den Mecanumrädern auf dem Untergrund abzustützende Gewichtsanteil. Hierbei kann es sich um manuell oder bevorzugt mit Hilfe von Aktuatormitteln, insbesondere eines elektromotorischen Antriebs antreibbare Mittel zur Einstellung der Vorspannung und/oder des Federwegs handeln. Der vorgenannte Federweg der Kraftspeichermittel kann beispielsweise durch Abstandsvariation einer Abstützfläche der Abstützmittel zum Untergrund bzw. zum Fahrgestell eingestellt werden, durch eine entsprechende höhenverstellbare Anordnung der Abstützmittel relativ zu dem Fahrgestell. Für den Fall einer federnden Lagerung der Abstützmittel gegenüber dem Fahrgestell über entsprechende Abstützkraftspeichermittel können zusätzlich oder alternativ zu den vorgenannten Mitteln zur Einstellung der Vorspannung der Kraftspeichermittel (manuelle oder aktuierte) Mittel zur Einstellung der Vorspannung der Abstützmittel am Fahrzeug vorgesehen sein.

Besonders zweckmäßig ist es, wie erwähnt, wenn die Vorspannung der Kraftspeichermittel oder etwaiger Abstützmittel und/oder ein (maximaler) Federweg der Kraftspeichermittel (insbesondere der Abstand einer Abstützfläche von Abstützmitteln zu einer Mecanumradabstützebene bzw. zum Untergrund) in Abhängigkeit der Gewichtskraft eine Zuladung einstellbar ist, wobei es besonders bevorzugt ist, wenn die Einstellung automatisiert, d.h. über Aktuatormittel vornehmbar ist. Als besonders zweckmäßig hat es sich nun herausgestellt, wenn die entsprechende Gewichtskraft mit Hilfe von Messmitteln des Mecanumradfahrzeuges bestimmbar ist. Dass also das Mecanumradfahrzeug Gewichtskraftmessmittel aufweist, die so ausgebildet und angeordnet sind, dass die Gewichtskraft einer Zuladung oder eines Gewichtskraftanteils dieser Zuladung, welcher über die Abstützmittel oder mindestens ein Mecanumrad auf dem Untergrund abstützbar ist messbar ist, wobei diese Messmittel (Kraftmessmittel) signalleitend mit entsprechenden Steuermitteln zum Ansteuern der vorgenannten Aktuatormittel verbunden sind, wobei die Steuermittel die Aktuatormittel zum Einstellen der Vorspannung der Kraftspeichermittel und/oder des vorgenannten Federweges und/oder einer Vorspannung von etwaigen Abstützkraftspeichermitteln in Abhängigkeit eines Sensorsignals der Messmittel, d.h. in Abhängigkeit des Zuladungsgewichtes (oder Gewichtsanteils) variieren bzw. einstellen, um einerseits die Belastung der Mecanumräder zu begrenzen und andererseits eine ausreichende Traktion, insbesondere zum Überwinden eines Anrollwiderstandes des Mecanumradfahrzeuges zu gewährleisten.

Für den bevorzugten Fall der Ausbildung des Mecanumradfahrzeuges als Lastfahrzeug, welches geeignet und bestimmt ist zur Aufnahme bzw. zum Transportieren einer Zuladung hat es sich als vorteilhaft herausgestellt, wenn auf dem Fahrgestell eine, insbesondere kippbare, Ladeeinrichtung, bevorzugt eine Ladewanne zur Aufnahme der Zuladung angeordnet ist.

Zusätzlich oder alternativ können auf dem Fahrgestell Hebemittel (Abtandsvariationsmittel) zum relativen Höhenverstellen (Abstandverstellen) einer Zuladung relativ zu dem Fahrgestell vorgesehen werden, wobei bei einer bevorzugten Ausgestaltung des Mecanumradfahrzeuges mit bei nicht Beaufschlagung mit einer Zuladung von dem Untergrund abgehobenen bzw. beabstandeten Abstützmitteln die Hebemittel das Fahrgestell in Richtung Untergrund bewegen und dabei die Kraftspeichermittel der Mecanumräder spannen, bis die Abstützmittel den Untergrund und/oder fakultative Abstützkraftspeichermittel gespannt sind, erreichen. Anders ausgedrückt sind die Hebemittel zum Relativverstellen einer Hebe- bzw. Auflage- bzw. Transportfläche zu dem Fahrgestell ausgebildet. Bevorzugt umfassen die Hebemittel eine Gabel, insbesondere eine Hebegabel in der Art eines Gabelstaplers oder eine Hebeplattform, wobei Hebegabel oder Hebeplattform dann die vorerwähnte Auflage bzw. Transportfläche der Hebemittel zur Aufnahme der Last bilden bzw. definieren. Bevorzugt ist die Auflage- bzw. Transportfläche zum Aufladen einer Zuladung parallel zur von den Mecanumrädern definierten Abstützebene ausgerichtet bzw. angeordnet.

Im Hinblick auf die konkrete Ausgestaltung der Kraftspeichermittel zum federnden Lagern der Mecanumräder, insbesondere zusammen mit dem jeweiligen Antrieb (insbesondere jeweils ein Elektromotor) gibt es unterschiedliche Möglichkeiten. In dem einfachsten Fall sind die Kraftspeichermittel (Federmittel) als klassische Federn, beispielsweise als Druckfedern, wie Schraubenfedern und/oder Torsionsfedern ausgebildet; die Kraftspeichermittel können auch Kombinationen unterschiedlich gestalteter Federn aufweisen. Bevorzugt sind solche Federn aus Metall ausgebildet und/oder aufgrund ihrer Geometrie federnd ausgebildet. Ebenfalls ist es denkbar, dass die Kraftspeichermittel Gasdruckfedern oder hydraulische Federn oder eine Kombination aus mechanischen Federn, Gasdruckfedern und/oder hydraulischen Federn umfassen. Auch ist es denkbar ausschließlich oder zusätzlich aufgrund der Materialwahl (z.B. Elastomermaterial) federnde bzw. kraftspeichernde Kraftspeichermittel vorzusehen. Wesentlich ist es, dass die Kraftspeichermittel derart ausgebildet und angeordnet sind, dass diese bei sich auf dem Untergrund abstützenden Abstützmittel für eine Begrenzung der von den Mecanumrädern abzustützenden Gewichtskraft Sorge tragen, d.h. zur Kraftpufferung dienen.

Ganz besonders bevorzugt ist es, wenn die Mecanumräder, insbesondere zusammen mit ihren Antrieben, d.h. die Mecanumradantriebe über federnd gelagerte Stützarme an dem Fahrgestell angeordnet bzw. gegenüber diesem federnd gelagert sind, wobei die Stützarme schwenkbar an dem Fahrgestell fixiert sind, derart, dass sich durch Verschwenken der Stützarme die Federspannung der Kraftspeichermittel ändert. Ganz besonderes bevorzugt ist eine Ausführungsform, bei der der Schwenkwinkel zum Einstellen der Kraftspeichermittelvorspannung manuell oder mit Hilfe von Aktuatormitteln veränderbar ist, um die von den Mecanumrädern zu tragende Gewichtskraft bzw. Gewichtskraftanteil zu variieren. Als besonders vorteilhaft hat es sich dabei herausgestellt, wenn die Kraftspeichermittel Torsionsfedern umfassen, welche durch Schwenken der Stützarme spannbar sind.

Zum Gewährleisten eines optimalen Untergrundkontaktes und zur Vermeidung von aus dem Stand der Technik bekannten Schwebezuständen hat es sich als vorteilhaft herausgestellt, wenn die Mecanumräder, wie aus der WO 2013/041310 bekannt ist, zwei Felgen umfassen, die jeweils rotierbar angeordnete Rollen über ihren Umfang tragen, wobei die Felgen über Dämpfungsmittel miteinander verbunden sind, die eine begrenzte Relativbewegung der Felgen zulassen, insbesondere eine Relativbewegung in Umfangsrichtung und/oder senkrecht zu einer Mecanumraddrehachse und/oder senkrecht zu einer Felgendrehachse der Felgen und/oder kippwinklig zueinander. Bevorzugt sind die Mecanumräder wie in der vorgenannten internationalen Patentanmeldung beschrieben ausgebildet.

Die Erfindung führt auch auf ein System, umfassend ein zuvor beschriebenes Mecanumradfahrzeug sowie eine von diesem getragene (wieder abnehmbare bzw. entfernbare) Zuladung, wobei eine Gewichtskraft der Zuladung anteilig über die Mecanumräder und anteilig über die Abstützmittel auf einem Untergrund abgestützt ist. Zudem führt die Erfindung auch auf ein Verfahren zum Betreiben eines nach dem Konzept der Erfindung ausgebildeten Mecanumradfahrzeuges. Kern des Verfahrens ist es, dass ein Teil der Gewichtskraft des Fahrgestells und/oder einer Zuladung der Mecanumräder und der andere Teil der Gewichtskraft über die Abstützmittel auf dem Untergrund abgestützt wird. Bevorzugt ist es dabei, wenn die Gewichtskraft, die über die Mecanumräder abgestützt wird in Abhängigkeit einer gemessenen Gewichtskraft der Zuladung eingestellt wird. Insbesondere durch eine entsprechende Anpassung der Vorspannung der Kraftspeichermittel und/oder einen Federweg der Kraftspeichermittel, insbesondere einen maximalen Federweg der Kraftspeichermittel, den diese zurücklegen müssen, bis die Abstützmittel den Untergrund erreichen und/oder bis fakultative Abstützkraftspeichermittel die maximal von der Zuladung verursachte Federspannung erreichen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a - 1d:: ein nach dem Konzept der Erfindung ausgebildetes Mecanumradfahrzeug in einem sich von unten in unterschiedlichen Betriebszuständen bzw. mit unterschiedlichen Abständen von benachbart zueinander angeordneten Fahrgestellabschnitten,
- Fig. 2:: in einer schematisierten Ansicht ein nach dem Konzept der Erfindung ausgebildetes Mecanumradfahrzeug in Draufsicht während unterschiedlicher Betriebszustände,
- Fig. 3 und 4:: eine alternative Ausführungsform eines nach dem Konzept der Erfindung ausgebildeten Mecanumradfahrzeuges mit einer Hubgabel umfassenden Hebemittel, die sich senkrecht zu einer ersten Einstellachse erstrecken und in einem Bereich zwischen einem ersten und einem zweiten Fahrzeugabschnitt, die entlang der Einstellachse abstandsvariabel sind, angeordnet ist,
- Fig. 5:: eine weitere alternative Ausführungsform eine nach dem Konzept der Erfindung ausgebildeten Mecanumradfahrzeuges mit Hebemitteln,
- Fig. 6a:: eine mögliche Ausführungsform eines nach dem Konzept der Erfindung ausgebildeten Mecanumradfahrzeuges in einer Seitenansicht ohne Zuladung,
- Fig. 6b:: ein Mecanumradfahrzeug gemäß Fig. 6a mit einer Zuladung,
- Fig. 7:: eine mögliche Ausführungsform eines nach dem Konzept der Erfindung ausgebildeten Mecanumradfahrzeuges in der Ansicht von unten,
- Fig. 8:: eine alternative Ausführungsform eines nach dem Konzept der Erfindung ausgebildeten Mecanumradfahrzeuges in einer Seitenansicht,
- Fig. 9:: eine weitere alternative Ausführungsform eines Mecanumradfahrzeuges, welches nach dem Konzept der Erfindung ausgebildet ist mit integralen Hebemitteln, und
- Fig. 10:: eine weitere alternative Ausführungsform eines nach dem Konzept der Erfindung ausgebildeten Mecanumradfahrzeuges in einer Seitenansicht.

In den Figuren sind gleiche Elemente und Elemente mit der gleichen Funktion mit den gleichen Bezugszeichen gekennzeichnet.

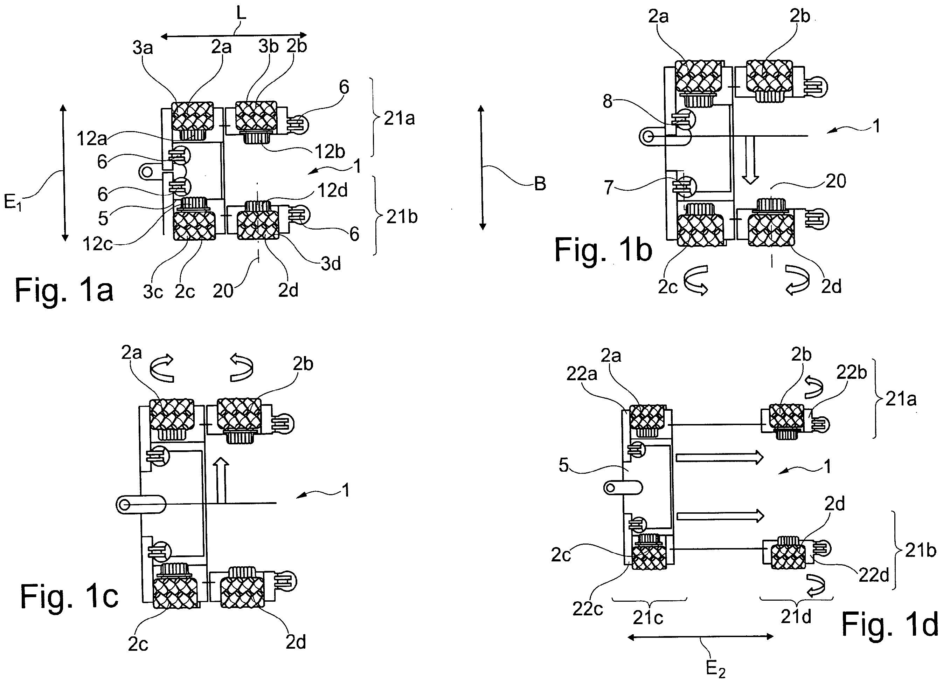

In den Fig. 1a bis 1d ist ein Mecanumradfahrzeug 1 gezeigt. Dieses umfasst insgesamt vier Mecanumradantriebe 2a bis 2d, die die Ecken eines gedachten Rechtecks begrenzen. Jeder Mecanumradantrieb 2a bis 2d umfasst ein Mecanumrad 3a bis 3d mit jeweils einem elektromotorischen Antrieb 12a bis 12d. Sämtliche Mecanumradantriebe 2a bis 2d, genauer deren elektromotorische Antriebe 12a bis 12d sind mit nicht gezeigten Steuermitteln zum individuellen Antreiben der Mecanumrädern 3a bis 3d zur Gewährleistung eines omnidirektionalen Betriebs verbunden.

Die Mecanumradantriebe 2a bis 2d sind fest, insbesondere über später noch zu erläutende Kraftspeichermittel, mit einem Fahrgestell 5 verbunden. Neben den Mecanumradantrieben 2a bis 2d trägt das Fahrgestell 5 mit diesen fest verbundene Stützmittel 6, hier in Form von um jeweils eine Drehachse 7 sowie eine senkrecht dazu orientierte Gelenkachse 8 rotierbar gelagerte Lasträder. Die Abstützmittel 6 sind weder um die Drehachse 7 noch um die Gelenkachse 8 mittels eines separaten Antriebs unmittelbar antreibbar, sondern Rotieren bzw. Verschwenken um diese in Abhängigkeit einer Fortbewegung des Mecanumradfahrzeuges 1 aufgrund des Antriebs der Mecanumräder 3a bis 3b.

Das Mecanumradfahrzeug 1 bzw. das Fahrgestell 5 weist eine Längsachse L sowie eine senkrecht dazu orientierte Breitenachse B auf, wobei die Längsachse L senkrecht orientiert ist zu Mecanumraddrehachsen 20, um die Felgen der Mecanumräder rotierbar sind. Winklig zu diesen Mecanumraddrehachsen 20 bzw. Felgendrehachsen sind Rollendrehachsen orientiert, um welche Rollen, die von den Mecanumradfelgen am Außenumfang in an sich bekannter Weise getragen werden, abrollen können.

Das Fahrgestell 5 weist einen ersten Fahrgestellabschnitt 21a mit den Mecanumradantrieben 2a und 2b sowie einen zweiten Fahrgestellabschnitt 21 b mit den Mecanumradantrieben 2b und 2c auf. Diese beiden Fahrgestellabschnitte 21 a und 21 b sind entlang einer ersten Einstellachse E1, die hier beispielhaft entlang der Breitenerstreckung bzw. parallel zur Breitenachse B verläuft abstandsveränderlich. Hierzu sind der erste und der zweite Fahrgestellabschnitt 21a, 21b mechanisch und abstandsvariabel entlang der Einstellachse E1 miteinander verbunden, beispielsweise über eine in der Zeichnungsebene links angeordnete und in der Zeichnungsebene von oben nach unten erstreckende, nicht eingezeichnete Teleskop- oder Schienenverbindung.

Zur Variation der Mecanumradfahrzeugbreite, d.h. der Erstreckung des Fahrgestells 5 entlang der Breitenachse B können beispielsweise die Mecanumradantriebe 2c und 2d, wie in Fig. 1b gezeigt ist, gegenläufig rotiert werden. Bevorzugt werden gleichzeitig die Mecanumradantriebe 2a und 2b gebremst bzw. festgehalten. Jedenfalls werden die Mecanumradantriebe 2a bis 2d so angesteuert, dass eine Kraftkomponente auf die Fahrgestellabschnitte 21a und 21b entlang der ersten Einstellachse E1 wirkt, so dass sich die Fahrgestellabschnitte 21a und 21b entlang der ersten Einstellachse E1 relativ zueinander bewegen. Zeitgleich oder zeitversetzt oder gar nicht können, wie in Fig. 1 c ezeigt ist, für eine weitere Verbreiterung die Mecanumradantriebe 2a bis 2b gegenläufig rotiert werden, während beispielsweise die Mecanumradantriebe 2d gebremst werden. Die sich aus den Fig. 1b und 1c ergebenden Verstellbewegungen können grundsätzlich auch gleichzeitig ausgeführt werden. Wesentlich ist jedenfalls, dass durch eine entsprechende Ansteuerung der Mecanumradantriebe 2a bis 2d der erste und der zweite Fahrgestellabschnitt 21a und 21 b relativ zueinander entlang der Einstellachse E1 verstellt werden unter Beibehaltung einer abstandsvariablen mechanischen Verbindung.

Insbesondere aus Fig. 1d ist zu erkennen, dass das Fahrgestell 5 neben dem ersten und dem zweiten Fahrgestellabschnitt 21 a und 21 b einen dritten Fahrgestellabschnitt 21c und einen vierten Fahrgestellabschnitt 21d aufweist. Der dritte Fahrgestellabschnitt 21c umfasst den Mecanumradantrieb 2a sowie den Mecanumradantrieb 2c, während der vierte Fahrgestellabschnitt 21d die Mecanumradantriebe 2b und 2d umfasst. Durch entsprechende Ansteuerung der Mecanumradantriebe 2a bis 2d, beispielsweise durch Bremsen bzw. Festhalten der Mecanumradantriebe 2a und 2c und gleichzeitiges Rotieren der Mecanumradantriebe 2b und 2d in einer gemeinsamen Rotationsrichtung kann der Abstand der Fahrgestellabschnitte 21c und 21d entlang einer zweiten Einstellachse E2, die senkrecht zur ersten Einstellachse E1 verläuft variiert werden, und zwar unter Beibehaltung der abstandsvariablen mechanischen Verbindung des dritten und des vierten Fahrgestellabschnitts 21c und 21d entlang der Einstellachse E2.

Grundsätzlich realisierbar ist auch eine Ausführungsform, bei der das Fahrzeug nur entlang einer der Einstellachsen E1 oder E2 verstellbar ist. Für den Fall der Längsverstellbarkeit handelt es sich dann bei der mit E2 bezeichneten Einstellachse um die erste Einstellachse E1 und bei den Fahrgestellabschnitten 21c und 21d um den ersten bzw. zweiten Fahrgestellabschnitt 21a und 21b.

In dem konkreten Ausführungsbeispiel setzen sich die Fahrgestellabschnitte 21a bis 21d jeweils zusammen aus paarweise Kombinationen von Teilfahrgestellabschnitten (Teilabschnitten) 22a bis 22d des Fahrgestells 5.

Konkret wird der erste Fahrgestellabschnitt 21a gebildet von den jeweils einen Mecanumradantrieb 2a bzw. 2b tragenden Teilabschnitten 22a und 22b, während der zweite Fahrgestellabschnitt 21b gebildet ist von den Teilabschnitten 22c und 22d mit den Mecanumradantrieben 2c und 2d, hier zur Realisierung der Breitenverstellbarkeit. Zur Realisierung der Längenverstellbarkeit wird der dritte Fahrgestellabschnitt 21 c gebildet von den Teilabschnitten 22a und 22c mit seinen Mecanumradantrieben 2a und 2c und der vierte Fahrgestellabschnitt 21d wird gebildet von den Teilabschnitten 22b und 22d mit seinen ihren Mecanumradantrieben 2b und 2d.

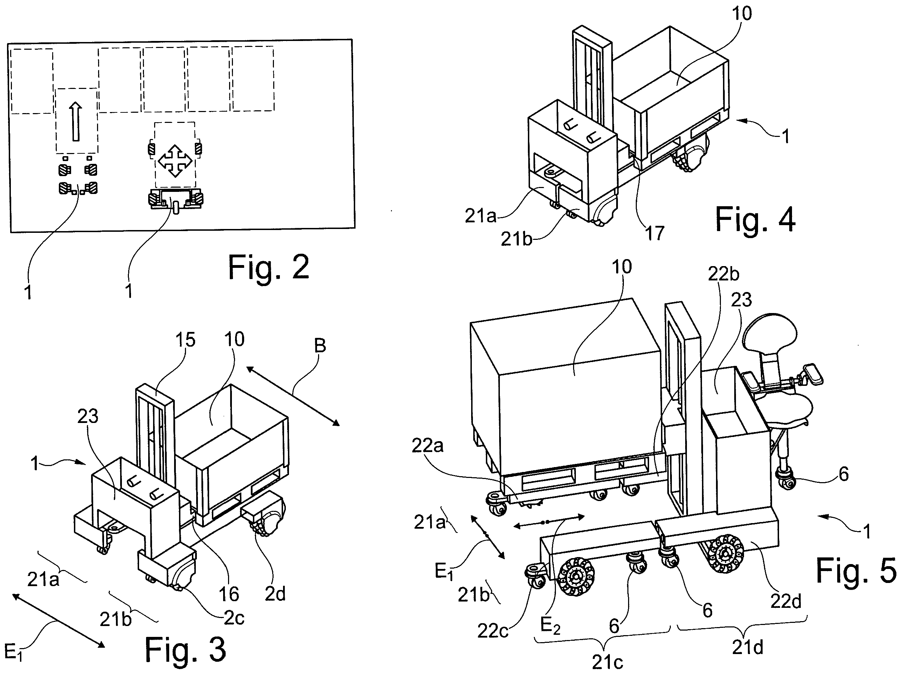

In Fig. 2 ist ein Mecanumradfahrzeug 1 in der Zeichnungsebene links in seiner minimalen Flächenerstreckung gezeigt, bei welcher die Fahrgestellabschnitte 21a bis 21d bzw. Teilabschnitte 22a bis 22d minimal beabstandet sind, während in der Zeichnungsebene rechts das Fahrgestell sowohl in der Breite als auch in der Länge vergrößert ist, wobei, wie mehrfach erläutert grundsätzlich auch eine Ausführungsform realisierbar ist, die ausschließlich breiten- oder längenveränderlich ist.

In den Fig. 3 und 4 ist eine besonders bevorzugte Ausführungsform eines Mecanumradfahrzeuges 1 in der Form eines Lastentransportfahrzeugs gezeigt. Lediglich beispielhaft ist das gezeigte Mecanumradfahrzeug 1 nur entlang der ersten Einstellachse E1 abstandsvariabel, wobei die Einstellachse E1 hier wieder mit der Breitenachse B des Fahrzeugs zusammenfällt. Das Mecanumradfahrzeug 1 umfasst einen ersten Fahrgestellabschnitt 21a und einen zweiten Fahrgestellabschnitt 21b mit ihren Mecanumradantrieben 2a und 2b bzw. 2c und 2d, die jeweils senkrecht zur Einstellachse E1 hintereinander angeordnet sind. Die beiden Fahrgestellabschnitte 21a und 21b sind entlang der Einstellachse E1 verschiebbar verbunden mit einem Verbindungsfahrgestellabschnitt 23. Anders ausgedrückt sind die Fahrgestellabschnitte 21a und 21d unmittelbar verschieblich verbunden mit diesem Verbindungsfahrgestellabschnitt 23 und dadurch mittelbar abstandsvariabel mechanisch miteinander verbunden. Durch entsprechende Ansteuerung der Mecanumradantriebe 2a bis 2d kann der Abstand der Fahrgestellabschnitte 21a und 21b entlang der ersten Einstellachse E1 verstellt werden, und zwar zwischen dem in Fig. 3a dargestellten maximalen und dem in Fig. 3b dargestellten minimalen Abstand. In sämtlichen Relativpositionen bleibt die mechanische Verbindung der Fahrgestellabschnitte 21a und 21b erhalten.

Zu erkennen ist, dass an dem Verbindungsfahrgestellabschnitt 23 Hebemittel 15 umfassend eine Hubgabel 16 angeordnet sind. Die Hubgabel 16 definiert bzw. bildet eine Auflagefläche 17 für eine Zuladung 10. Die Hubgabel 16 befindet sich in einem Bereich zwischen den ersten Fahrgestellabschnitten 21a und 21b und erstreckt sich senkrecht zur ersten Einstellachse E1.

Vorstehende Konstruktion ermöglicht es nach Aufnahme der Zuladung 10 (Palette) das Fahrwerk auf seine minimale Breite zu minimieren durch entsprechende Ansteuerung der Mecanumradantriebe 2a bis 2d, wodurch die Mobilität erhöht wird.

Bei Bedarf kann das in den Fig. 3 und 4 gezeigt, lediglich breitenvariable Mecanumradfahrzeug 1 zusätzlich längenvariabel ausgestaltet sein - dann sind ein dritter und ein vierter Fahrgestellabschnitt 21c und 21d jeweils mit zwei Mecanumradantrieben 2c und 2d vorzusehen, wobei bevorzugt hierzu die gleichen Mecanumradantriebe 2a bis 2d dieselben Mecanumradantriebe Verwendung finden, wie diese zur Realisierung der Breitenverstellbarkeit vorgesehen sind, analog zu dem Ausführungsbeispiel gemäß den Fig. 1a bis 1d.

In Fig. 5 ist ein Mecanumradfahrzeug 1 gezeigt. Der Aufbau entspricht im Wesentlichen dem Aufbau des Mecanumradfahrzeuges 1 gemäß Fig. 3 und 4 - zusätzlich weist das Mecanumradfahrzeug 1 gemäß Fig. 4 eine Erstreckungsvariabilität entlang einer zweiten Einstellachse E2 auf. Hierzu sind zusätzlich zu dem ersten und dem zweiten Fahrzeuggestellabschnitt 21 a und 21 b ein dritter und ein vierter Fahrgestellabschnitt 21 c und 21d vorgesehen. Die beiden Fahrgestellabschnitte 21a und 21b sind mittelbar über den Verbindungsfahrgestellabschnitt 23 abstandsvariabel mechanisch miteinander verbunden. Dieser befindet sich in einem Bereich zwischen den und ggf. ober- oder unterhalb der Teilabschnitten 22b und 22d. Der Teilabschnitt 22d ist ansonsten nur noch entlang der zweiten Einstellachse E2 mit dem Teilabschnitt 22c verbunden, analog der Teilabschnitt 22b mit dem Teilabschnitt 22a. Die paarweise Zuordnung ist analog zu dem Ausführungsbeispiel gemäß den Fig. 1a bis 1 d realisiert.

Im Folgenden ist die Funktionsweise einer bevorzugt vorgesehenen federnden Lagerung der Mecanumradantriebe 21a bis 21d in Kombination mit Abstützmitteln beschrieben, wobei auf die weitere, zuvor beschriebene Funktionalität bzw. Breiten- und/oder Längenänderbarkeit nicht eingegangen wird - diese ist selbstverständlich auch bei den folgenden Ausführungsvarianten durch eine mehrteilige Ausbildung des Fahrgestells 5 und einer entsprechende Ansteuerrealisierung der Mecanumräder 3 realisiert.

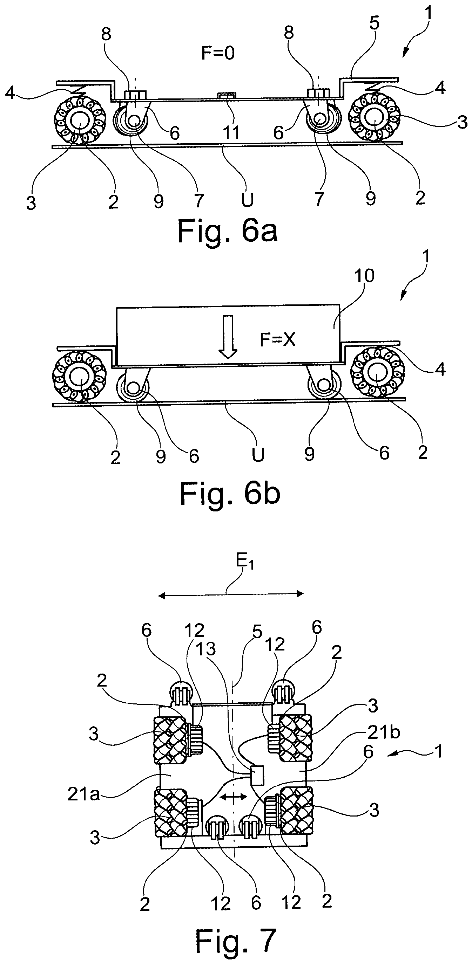

In den Fig. 6 und 6b ist nochmals das Grundprinzip eines nach dem Konzept der Erfindung ausgebildeten Mecanumradfahrzeuges 1 gezeigt. Dieses umfasst insgesamt vier Mecanumradantriebe 2, die die Ecken eines gedachten Rechteckes begrenzen und von denen in der Seitenansicht nur zwei in Richtung einer Längsrichtung des Fahrzeuges 1 beabstandete Antriebe zu sehen sind. Die beiden weiteren Mecanumradantriebe befinden sich in der Zeichnungsebene dahinter. Jeder Mecanumradantieb 2 umfasst ein Mecanumrad 3 mit nicht gezeigtem, daran angeordnetem, elektromotorischen Antrieb. Sämtliche Antriebe sind in an sich bekannter Weise mit nicht dargestellten Steuermitteln zum individuellen Antreiben der Mecanumräder 3 zur Gewährleistung eines omnidirektionalen Betriebes verbunden. Das Fahrgestell 5 ist mehrteilig zur Realisierung einer Breiten- und/oder Längenveränderbarkeit ausgebildet (nicht gezeigt - vgl. vorhergehende Darstellungen).

Zu erkennen ist, dass die Mecanumräder 3 zusammen mit ihren Antrieben 2 über Kraftspeichermittel 4 federnd gelagert sind gegenüber einem Fahrgestell 5, welches die Mecanumräder 3 mit ihren Antrieben trägt. Die Kraftspeichermittel 4 sind lediglich beispielhaft als Schraubenfeder im Rahmen einer vereinfachten Darstellung wiedergegebenen. Selbstverständlich sind auch andere, federnde Lagerungen möglich - wesentlich ist, dass zumindest eine senkrecht zu einem Untergrund U orientierte Federkaftkomponente zwischen dem Fahrgestell 5 und den Mecanumrädern 3 wirkt.

Neben den Mecanumrädern 3 trägt das mehrere Abschnitte aufweisende Fahrgestell 5 mit diesem fest verbundene Abstützmittel 6, hier in der Form von um jeweils eine Drehachse 7 sowie um eine senkrecht dazu orientierte Gelenkachse 8 rotierbar gelagerte Lasträder.

Die Abstützmittel 6 sind weder um die Drehachse 7 noch um die Gelenkachse 8 mittels eines separaten Antriebs unmittelbar antreibbar, sondern rotieren bzw. verschwenken um diese in Abhängigkeit einer Fortbewegung des Mecanumradfahrzeuges 1 aufgrund des Antriebs der Mecanumräder 3.

In Fig. 6a ist ein Zustand ohne eine Zuladung gezeigt. Es wirkt eine in dem gezeigten Ausführungsbeispiel im Wesentlichen von dem Fahrgestell 5 verursachte Gewichtskraft über die Kraftspeichermittel 4 auf die Mecanumräder 3, so dass diese in dem gezeigten Zustand diese gesamte Gewichtskraft auf dem Untergrund abstützen. Die von den Abstützmitteln 6, genauer von den Lasträdern gebildeten Abstützflächen 9 (Sollkontaktflächen zum Untergrund) sind zum Untergrund U beabstandet.

Fig. 6b zeigt das Mecanumradfahrzeug 1 gemäß Fig. 1 a mit aufgesetzter Zuladung (Last) 10. Diese hat eine Gewichtskraft F von X Nm. Aufgrund der Zuladung 10 bzw. aufgrund von deren Gewichtskraft F werden die Kraftspeichermittel 4 durch Zurücklegen eines Federweges gespannt, in dem das Fahrgestell 5 mit Zuladung 10 entgegen der Federkraft der Kraftspeichermittel 4 in der Gewichtskraftrichtung selbsttätig nach unten verstellt, bis die Abstützmittel 6 sich mit ihrer Abstützfläche 9 auf dem Untergrund abstützen. Es bleibt ein geringer Restfederweg der Kraftspeichermittel zum Ausgleich von Unebenheiten des Untergrundes U erhalten (Restfedervermögen). Durch entsprechende Wahl der Kraftspeichermittel 4 und des verbleibenden Restfederweges bzw. Restfedervermögens ist die über die Mecanumräder 3 abzustützende Gewichtskraft begrenzt. Mit anderen Worten wird nur ein Anteil der Gewichtskraft der Zuladung 10 über die Mecanumräder und der andere Teil über die Abstützmittel auf dem Untergrund abgestützt. Die Kraftspeichermittel 4 sind so gewählt, dass bezogen auf die Zuladung 10 bzw. das entsprechende Gesamtgewicht ausreichend Traktion der Mecanumräder 3 auf dem Untergrund U gegeben ist, um das Mecanumradfahrzeug (omnidirektional) fortzubewegen.

Besonders bevorzugt ist eine Ausführungsform, bei der die Vorspannung der Kraftspeichermittel 4, insbesondere in Abhängigkeit der zu ladenden Zuladung 10 einstellbar ist und/oder eine Vorspannung von fakultativen hier nicht gezeigten Abstützkraftspeichermitteln, mit denen die Abstützmittel 6 bei Bedarf gegenüber dem Fahrgestell 5 federnd gelagert sein können. Ebenso ist es denkbar, den Abstand der Abstützfläche bezogen auf den zustand gemäß Fig. 1a ohne Last relativ zum Untergrund zur Einstellung des Federweges und damit eines Restfederweges der Feder einzustellen.

Ganz besonders bevorzugt erfolgt mindestens eine der vorgenannten Einstellungen in Abhängigkeit der zu bestimmenden Gewichtskraft oder eines zu bestimmenden Gewichtskraftanteils der Zuladung 10. Hierzu können beispielsweise wie in Fig. 1 angedeutet Messmittel (Kraftmessmittel) 11 vorgesehen werden, beispielsweise auf dem mehrere Abschnitte aufweisenden Fahrgestell 5, mit denen die Gewichtskraft einer Zuladung bestimmbar ist. In Abhängigkeit dieser Gewichtskraft, welche alternativ auch außerhalb des Mecanumradfahrzeugs 1 bestimmt werden kann, werden dann manuell oder über Aktuatormittel eine der vorgenannten Einstellungen vorgenommen, wobei es ganz besonders bevorzugt ist, wenn dies automatisch in Abhängigkeit eines Sensorsignals der Messmittel 11 durch entsprechende Ansteuerungen der Aktuatormittel mit Hilfe von Steuermitteln erfolgt.

Fig. 7 zeigt eine mögliche Ausführungsform eines Mecanumradfahrzeuges 1, welches nach dem Konzept der Erfindung ausgebildet ist von unten. Zu erkennen sind die vier, die Ecken eines gedachten Rechtecks, begrenzenden Mecanumradantriebe 2, die jeweils ein Mecanumrad 3 umfassen, welches mittels eines Antriebs, hier jeweils eines elektromotorischen Antriebes 12 zur Gewährleistung eines omnidirektionalen Betriebs antreibbar ist. Die Antriebe 12 werden dabei von Steuermitteln 13 in eine individuelle Richtung und/oder mit einer individuellen Geschwindigkeit angetrieben.

Jedes Mecanumrad 3 umfasst eine Mehrzahl von über einen Umfang des Rades verteilt angeordneten, bevorzugt tonnenförmigen Rollen, deren Rollendrehachsen winklig zu den Mecanumraddrehachsen angeordnet ist, wobei bevorzugt die Mecanumraddrehachsen zweier benachbarter Mecanumräder fluchten und die Mecanumraddrehachse zweier Mecanumradpaare parallel zueinander ausgerichtet sind.

Zu erkennen ist das einen ersten und einen zweiten, entlang der ersten Einstellachse E1 durch Ansteuerung der Mecanumräder 3 relativ zueinander verstellbare Fahrgestellabschnitte 21a und 21 b aufweisende Fahrgestell 5, gegenüber welchem die Mecanumradantriebe 2 federnd gelagert sind. Das Fahrgestell 5 trägt zudem Abstützmittel 6 zum Tragen einer Last.

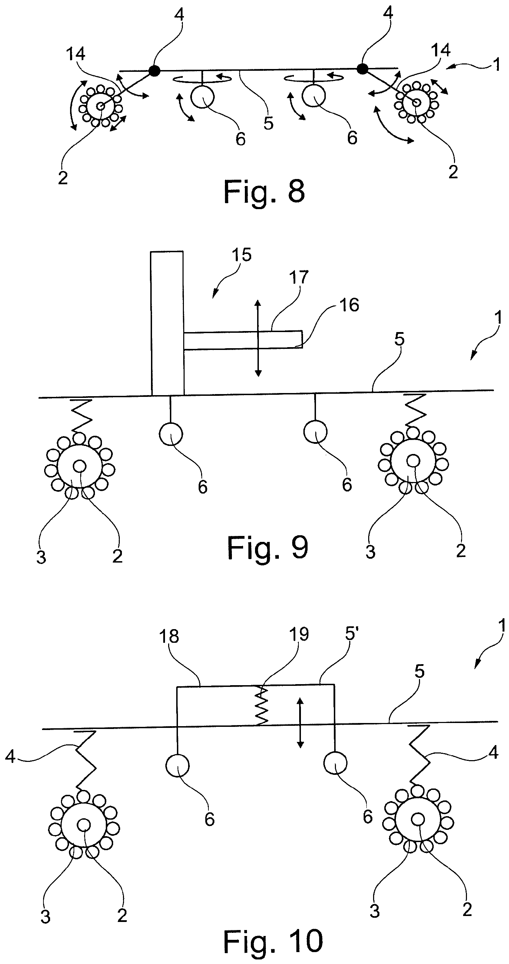

Fig. 8 zeigt stark schematisiert eine bevorzugte Ausführungsform eines Mecanumradfahrzeuges 1. Die Mecanumradantriebe 2 sind über Stützarme 14 verschwenkbar an dem Fahrgestell 5 angelenkt. Dem Stützarm 14 sind jeweils Kraftspeichermittel 4 in Form von Torsionsfedern zugeordnet, wobei die Torsionsfedern bevorzugt mit separaten, nicht gezeigten Antrieben zur Variation der Kraftspeichermittelvorspannung vorspannbar sind. Selbstverständlich sind zusätzlich oder alternativ zu Torsionsfedern auch anders gestaltete Federn z.B. Gasdruckfedern oder Schraubenfedern einsetzbar.

Zu erkennen ist auch hier, dass neben den Mecanumrädern 3 Abstützmittel 6 vorgesehen sind, mit welchen ein Teil einer zu tragenden Zuladung auf einem Untergrund abstützbar ist.

Fig. 9 zeigt in einer stark schematisierten Ansicht ein Mecanumradfahrzeug 1, welches von seinem prinzipiellen Aufbau dem Ausführungsbeispiel gemäß Fig. 1 a bis 2 entspricht. Auf dem Fahrgestell 5 befinden sich Hebemittel 15 (Abstandsvariationsmittel) zum Verändern eines Abstandes zwischen einer von den Hebemitteln 15 definierten Auflagefläche 17 für eine zu transportierende Last und dem Fahrgestell 5. In dem konkreten Ausführungsbeispiel umfassen die Hebemittel 15 eine Hubgabel 16, die mit einem geeigneten, beispielsweise elektromotorischen Antrieb relativ zum Fahrgestell 5 höhenverstellbar angeordnet ist.

Alternative Hebemittel 15, beispielsweise in Form einer über eine Kolbenzylinderanordnung, einen Spindeltrieb oder ein Scherengelenkantrieb oder dgl. Antriebe höhenverstellbare Plattformen sind zusätzlich oder alternativ realisierbar. Bevorzugt umfassen die Antriebe einen Motor, insbesondere einen Elektromotor.

Fig. 10 zeigt eine alternative Ausführungsform eines Mecanumradfahrzeuges 1 mit Mecanumradantrieben 2 sowie Abstützmitteln 6, die bei nicht Beaufschlagung mit einer Zuladung analog zu dem Ausführungsbeispiel gemäß den Figuren 1a und 1b vom Untergrund abgehoben sind. Die Abstützmittel 6 umfassen rotierbar und lenkbar angeordnete Rollen, die an einem höhenverstellbaren Fahrgestellabschnitt des Fahrgestells 5, welcher in dem gezeigten Ausführungsbeispiel als Tragelement 18 bezeichnet ist festgelegt sind, welches wieder höhenverstellbar an dem Fahrgestell 5 festgelegt ist. Mit anderen Worten sind die Abstützmittel 6 höhenverstellbar am Fahrgestell 5 fixiert. Das Traggestell 18 stützt sich über ein Federelement 19 am Fahrgestell 5 ab und dient zur Aufnahme einer Zuladung. Die Federsteifigkeit des Federelementes 19 ist dabei geringer als die Federsteifigkeiten der Kraftspeichermittel 4, wodurch sich das Tragelement 18 bei Lastbeaufschlagung absenkt, bis die Abstützmittel 6 bzw. deren Abstützfläche den Untergrund erreichen, wobei in diesem Zustand ein Restfederweg der Kraftspeichermittel 4 sichergestellt ist, so dass nur eine Teilgewichtskraft über die Mecanumräder 3 am Untergrund abgestützt wird.

### Bezugszeichenliste

- 1: Mecanumradfahrzeug
- 2: Mecanumradantrieb
- 2a bis 2d: Mecanumradantriebe
- 3: Mecanumräder
- 4: Kraftspeichermittel
- 5: Fahrgestell
- 6: Abstützmittel
- 7: Drehachse
- 8: Gelenkachse
- 9: Abstützfläche
- 10: Zuladung
- 11: Messmittel
- 12: Antriebe der Mecanumradantriebe
- 12a bis 12d: Mecanumradantriebe
- 13: Steuermittel
- 14: Stützarme
- 15: Hebemittel
- 16: Hubgabel
- 17: Auflagefläche
- 18: Tragelement
- 19: Federelement
- 20: Mecanumraddrehachsen
- 21a bis 21d: Fahrgestellabschnitte
- 22a bis 22d: Teilabschnitte
- 23: Verbindungsfahrgestellabschnitte

- L: Längsachse
- B: Breitenachse
- E1: erste Einstellachse
- E2: zweite Einstellachse

- U: Untergrund

## Patentansprüche

1. Mecanumradfahrzeug (1), insbesondere zum Transportieren einer Zuladung, mit einem sich entlang einer Längsachse (L) und einer senkrecht dazu orientierten Breitenachse (B) erstreckenden Fahrgestell (5) mit mindestens vier Mecanumradantrieben (2; 2a bis 2d), die über Steuermittel (13) zur Realisierung eines omnidirektionalen Betriebs des Mecanumradfahrzeuges (1) ansteuerbar sind, wobei das Fahrgestell (5) einen ersten Fahrgestellabschnitt (21a) mit mindestens zwei (2a, 2b) der Mecanumradantriebe (2; 2a, 2b, 2c, 2d) und einen zweiten Fahrgestellabschnitt (21b) mit mindestens zwei (2c, 2d) der Mecanumradantriebe (2; 2a, 2b, 2c, 2d) aufweist,
**dadurch gekennzeichnet,**
**dass** der erste und der zweite Fahrgestellabschnitt (21a, 21b) entlang einer ersten Einstellachse (E1) benachbart angeordnet und abstandsvariabel mechanisch miteinander verbunden sind, und dass der Abstand zwischen dem ersten und zweiten Fahrgestellabschnitt (21a, 21b) entlang der ersten Einstellachse (E1) durch Ansteuerung von mindestens einem der Mecanumradantriebe (2; 2a, 2b, 2c, 2d) des ersten Fahrgestellabschnitts (21a) und/oder des zweiten Fahrgestellabschnitts (21b) mittels der Steuermittel (13) einstellbar ist.

2. Mecanumradfahrzeug nach Anspruch 1,
**dadurch gekennzeichnet,**
**dass** das Fahrgestell (5) einen dritten Fahrgestellabschnitt (21c) mit mindestens zwei (2a, 2b) der Mecanumradantriebe (2; 2a, 2b, 2c, 2d) und einen vierten Fahrgestellabschnitt (21d) mit mindestens zwei (2b, 2d) der Mecanumradantriebe (2; 2a, 2b, 2c, 2d) aufweist, wobei der dritte und der vierte Fahrgestellabschnitt (21c, 21d) abstandsvariabel mechanisch miteinander verbunden sind und wobei der Abstand zwischen dem dritten und vierten Fahrgestellabschnitt (21c, 21d) entlang einer sich winklig, insbesondere senkrecht, zur ersten Einstellachse (E1) erstreckenden zweiten Einstellachse (E2) durch Ansteuerung von mindestens einem der Mecanumradantriebe (2; 2a, 2b, 2c, 2d) des dritten und/oder vierten Fahrgestellabschnitts (21c, 21d) mittels der Steuermittel (13) einstellbar ist.

3. Mecanumradfahrzeug nach Anspruch 2,
**dadurch gekennzeichnet,**
**dass** der dritte und der vierte Fahrgestellabschnitt (21c, 21d) jeweils einen, mindestens einen Mecanumradantrieb (2; 2a, 2b, 2c, 2d) aufweisenden Teilabschnitt (22a bis 22d) des ersten Fahrgestellabschnittes (21a) und einen, mindestens einen Mecanumradantrieb (2; 2a, 2b, 2c, 2d) aufweisenden sowie, bevorzugt senkrecht, zur ersten Einstellachse (E1) benachbarten Teilabschnitt (22; 22a, 22b, 22c, 22d) des zweiten Fahrgestellabschnittes (21b) umfassen oder jeweils von diesen gebildet sind und dass die mindestens zwei Mecanumradantriebe (2a, 2c) des dritten Fahrgestellabschnittes (21c) mindestens einen Mecanumradantrieb (2a) des ersten Fahrgestellabschnittes (21c) und mindestens einen Mecanumradantrieb (2c) des zweiten Fahrgestellabschnittes (21b) umfassen oder von diesen gebildet sind, und dass die mindestens zwei Mecanumradantriebe (2b, 2d) des vierten Fahrgestellabschnittes (21d) mindestens einen Mecanumradantrieb (2b) des ersten Fahrgestellabschnittes (21a) und mindestens einen Mecanumradantrieb (2d) des zweiten Fahrgestellabschnittes (21b) umfassen oder von diesen gebildet sind.

4. Mecanumradfahrzeug nach Anspruch 3,
**dadurch gekennzeichnet,**
**dass** der dritte und der vierte Fahrgestellabschnitt (21c, 21d) unmittelbar abstandsvariabel miteinander oder mit einem Verbindungsfahrgestellabschnitt (23) nur über die Teilabschnitte (22a, 22b) des ersten Fahrgestellabschnittes (21a) oder alternativ (22c, 22d) des zweiten Fahrgestellabschnittes (21b) verbunden sind oder dass der dritte und der vierte Fahrgestellabschnitt (21c, 21d) unmittelbar abstandsvariabel miteinander oder mit einem Verbindungsfahrgestellabschnitt (23) sowohl über die Teilabschnitte (22a, 22b; 22c, 22d) des ersten Fahrgestellabschnittes (21a) und des zweiten Fahrgestellabschnittes (21b) verbunden sind.

5. Mecanumradfahrzeug nach einem der vorhergehenden Ansprüche,
**dadurch gekennzeichnet,**
**dass** die erste Einstellachse (E1) mit der Breitenachse (B) oder der Längsachse (L) zusammenfällt.

6. Mecanumradfahrzeug nach einem der vorhergehenden Ansprüche,
**dadurch gekennzeichnet,**
**dass** die Mecanumradantriebe (2a bis 2d) jeweils mindestens einen, insbesondere elektromotorischen Antriebsmotor und mindestens ein von diesem antreibbares, um eine Mecanumraddrehachse (20) rotierbaren sowie am Außenumfang eine Mehrzahl von in Umfangsrichtung um die Mecanumraddrehachse (20) benachbarten Rollen tragendes Mecanumrad (3) aufweisen, wobei vorzugsweise die Mecanumraddrehachsen (20) der Mecanumräder (3) parallel zur Breitenachse (B) und senkrecht zur Längsachse (L) orientiert sind.

7. Mecanumradfahrzeug nach einem der vorhergehenden Ansprüche,
**dadurch gekennzeichnet,**
**dass** das Mecanumradfahrzeug (1) Hebemittel (15) zum Verändern eines senkrecht zur Längsachse (L) und zur Breitenachse (B) orientierten Höhenabstandes zwischen einer, vorzugsweise von einer Hubgabel (16) gebildeten, Auflagefläche (17) für eine Zuladung und den Mecanumradantrieben (2; 2a, 2b, 2c, 2d) aufweist.

8. Mecanumradfahrzeug nach Anspruch 7,
**dadurch gekennzeichnet,**
**dass** die Auflagefläche (17), insbesondere die Hubgabel (16), zwischen dem ersten und dem zweiten Fahrgestellabschnitt (21a, 21 b) angeordnet und der Abstand des ersten und/oder zweiten Fahrgestellabschnitts (21a, 21b) zu der Auflagefläche (17) entlang der ersten Einstellachse (E1) durch Ansteuerung der Mecanumradantriebe (2; 2a, 2b, 2c, 2d) des ersten und/oder zweiten Fahrgestellabschnitts (21a, 21b) einstellbar ist.

9. Mecanumradfahrzeug nach einem der vorhergehenden Ansprüche,
**dadurch gekennzeichnet,**
**dass** eine Gewichtskraft des Fahrgestells (5) sowohl über die Mecanumräder (3) als auch über zusätzlich zu den Mecanumrädern (3) vorgesehene Abstützmittel (6) des Mecanumradfahrzeugs (1) auf einem Untergrund (U) abstützbar ist und dass die jeweils mindestens ein Mecanumrad (3) aufweisenden Mecanumradantriebe (2; 2a, 2b, 2c, 2d) zum Begrenzen des über die Mecanumradantriebe (2; 2a, 2b, 2c, 2d) auf dem Untergrund (U) abzustützenden Gewichtskraftsanteils des Fahrgestells (5) und einer etwaigen von diesem zu tragenden Zuladung mit Hilfe von Kraftspeichermitteln (4) federnd gegenüber dem Fahrgestell (5) gelagert sind.

10. Mecanumradfahrzeug nach Anspruch 9,
**dadurch gekennzeichnet,**
**dass** die Abstützmittel (6) mindestens ein beim Fahren des Mecanumradfahrzeuges (1) um eine Drehachse (7) rotierbares Lastrad aufweisen, welches bei einem Richtungswechsel des Mecanumradfahrzeuges (1) um eine Gelenkachse (8) rotierbar ist und/oder dass die Abstützmittel (6) eine rotierbar angeordnete Kugel zum Abstützen auf dem Untergrund (U) aufweisen.

11. Mecanumradfahrzeug nach einem der Ansprüche 9 oder 10,
**dadurch gekennzeichnet,**
**dass** die Kraftspeichermittel (4) derart ausgebildet sind, dass die Abstützmittel (6) bei nicht mit einer Zuladung beaufschlagtem Fahrgestell (5) oberhalb einer von den Mecanumrädern (3) definierten Abstützebene angeordnet sind und sich bei Beaufschlagen mit einer Zuladung bei gleichzeitiger Erhöhung der Federspannung der Kraftspeichermittel (4), insbesondere zusammen mit dem Fahrgestell (5), absenken.

12. Mecanumradfahrzeug nach Anspruch 11,
**dadurch gekennzeichnet,**
**dass** der Abstand zwischen einer von den Abstützmitteln (6) gebildeten Abstützfläche (9) und der von den Mecanumrädern (3) definierten Abstützebene einstellbar ist.

13. Mecanumradfahrzeug nach einem der vorhergehenden 9 bis 12,
**dadurch gekennzeichnet,**
**dass** die Abstützmittel (6) nicht federnd gegenüber den Fahrgestell (5) gelagert sind oder derart über Abstützkraftspeichermittel gegenüber dem Fahrgestell (5) federnd gelagert sind, dass eine Federsteifigkeit der Abstützkraftspeichermittel größer ist als eine Federsteifigkeit der Kraftspeichermittel (4).

14. Mecanumradfahrzeug nach einem der vorhergehenden 9 bis 13,
**dadurch gekennzeichnet,**
**dass** eine Vorspannung der Kraftspeichermittel (4) und/oder ein Federweg der Kraftspeichermittel (4) zum Einstellen des maximal von den Mecanumrädern (3) auf dem Untergrund (U) abzustützenden Gewichtsanteils manuell oder mittels Aktuatormitteln einstellbar ist.

15. Mecanumradfahrzeug nach einem der vorhergehenden 9 bis 14,
**dadurch gekennzeichnet,**
**dass** das Mecanumradfahrzeug (1) Messmittel zum Bestimmen einer Gewichtskraft oder eines Gewichtskraftanteils des Fahrgestells (5) und/oder einer Zuladung aufweist, und dass die Messmittel signalleitend mit Steuermitteln (13) zum Ansteuern der Aktuatormittel zum Einstellen der Vorspannung der Kraftspeichermittel (4) und/oder des Federweges in Abhängigkeit eines Sensorsignals der Messmittel verbunden sind.

16. Verfahren zum Betreiben eines Mecanumradfahrzeuges (1) nach einem der vorhergehenden Ansprüche,
**dadurch gekennzeichnet,**
**dass** der Abstand zwischen dem ersten und zweiten Fahrgestellabschnitt (21a und 21b) entlang der ersten Einstellachse (E1) durch Ansteuerung von mindestens einem der Mecanumradantriebe (2; 2a, 2b, 2c, 2d) des ersten Fahrgestellabschnitts (21a) und/oder des
zweiten Fahrgestellabschnitts (21b) mittels der Steuermittel (13) eingestellt wird.

## Claims

1. Mecanum wheel vehicle (1), more particularly for transporting a load, with a chassis (5), extending along a longitudinal axis (L) and a transverse axis (B) orientated at right angles thereto, with at least four mecanum wheel drives (2; 2a to 2d), which can be actuated by way of control means (13) for bringing about omnidirectional operation of the mecanum wheel vehicle (1), wherein the chassis (5) comprises a first chassis section (21a) with at least two (2a, 2b) of the mecanum wheel drives (2; 2a, 2b, 2c, 2d) and a second chassis section (21b) with at least two (2c, 2d) of the mecanum wheel drives (2; 2a, 2b, 2c, 2d)
**characterised in that**
the first and the second chassis section (21a, 21b) are arranged adjacently along a first adjusting axis (E1) and mechanically connected to each other with variable spacing, and **in that** the distance between the first and second chassis section (21a, 21b) can be adjusted along the first adjusting axis (E1) through the actuation by way of the control means (13) of at least one of the mecanum wheel drives (2; 2a, 2b, 2c, 2d) of the first chassis section (21a) and/or of the second chassis section (21b).

2. Mecanum wheel vehicle according to claim 1
**characterised in that**
the chassis (5) has a third chassis section (21c) with at least two (2a, 2b) of the mecanum wheel drives (2; 2a, 2b, 2c, 2d) and a fourth chassis section (21d) with at least two (2b, 2d) of the mecanum wheel drives (2; 2a, 2b, 2c, 2d), wherein the third and the forth chassis section (21c, 21d) are connected to each other with variable spacing and wherein the distance between the first and fourth chassis section (21c, 21d) can be adjusted along a second adjusting axis (E2) extending at an angle, more particularly at right angles to a first adjusting axis (E1) through the actuation by way of the control means (13) of at least one of the mecanum wheel drives (2; 2a, 2b, 2c, 2d) of the third and/or fourth chassis section (21c, 21d).

3. Mecanum wheel vehicle according to claim 2
**characterised in that**
the third and the fourth chassis section (21c, 21d) each comprise or are formed of a partial section (22a to 22d) of the first chassis section (21a) having at least one mecanum wheel drive (2; 2a, 2b, 2c, 2d), and a partial section (22; 22a, 22b, 22c, 22d) of the second chassis section (21b), having at least one mecanum wheel drive (2; 2a, 2b, 2c, 2d), which is preferably perpendicularly adjacent to the first adjusting axis (E1), and **in that** the at least two mecanum wheel drives (2a, 2c) of the third chassis section (21c) comprise or are formed of at least one mecanum wheel drive (2a) of the first chassis section (21c) and at least one mecanum wheel drive (2c) of the second chassis section (21b), and **in that** the at least two mecanum wheel drives (2b, 2d) of the fourth chassis section (21d) comprise or are formed of at least one mecanum wheel drive (2b) of the first chassis (21a) and at least one mecanum drive (2d) of the second chassis (21b).

4. Mecanum wheel vehicle according to claim 3
**characterised in that**
the third and the fourth chassis section (21c, 21d) are directly connected to each other with variable spacing or are connected to a connection chassis section (23) only via the partial sections (22a, 22b) of the first chassis section (21a) or alternatively (22c, 22d) of the section chassis section (21b) or that the third and the fourth chassis section (21c, 21d) are directly connected to each other with variable spacing or are connected to a connection chassis section (23) both via the partial sections (22a, 22b, 22c, 22d) of the first chassis section (21a) and of the second chassis section (21b)

5. Mecanum wheel vehicle according to any one of the preceding claims
**characterised in that**
the first adjusting axis (E1) coincides with the transverse axis (B) or the longitudinal axis (L).

6. Mecanum wheel vehicle according to any one of the preceding claims
**characterised in that**
the mecanum wheel drives (2a to 2d) each comprise at least one, preferably electrical drive motor and at least one mecanum wheel (3) which can be actuated thereby and bears a plurality of rollers which are rotatable about a mecanum wheel rotational axis (20) and on the outer perimeter adjoin each other in the circumferential direction about the mecanum wheel axis (20), wherein preferably the mecanum wheel axes (20) of the mecanum wheels (3) are orientated in parallel to the transverse axis (B) and perpendicularly to the longitudinal axis (L).

7. Mecanum wheel vehicle according to any one of the preceding claims
**characterised in that**
the mecanum wheel vehicle (1) has lifting means (15) for changing a height spacing, orientated perpendicularly to the longitudinal axis (L) and to the transverse axis (B), between a receiving surface (17), preferably formed by a lifting fork (16), for a load and the mecanum wheel drives (2; 2a, 2b, 2c, 2d).

8. Mecanum wheel vehicle according to claim 7
**characterised in that**
the receiving surface (17), more particularly the lifting fork (16), is arranged between the first and the second chassis section (21a, 21b) and the distance of the first and/or second chassis section (21a, 21b) to the receiving surface (17) can be adjusted along the first adjusting axis (E1) through actuation of the mecanum wheel drives (2; 2a, 2b, 2c, 2d) of the first and/or second chassis section (21a, 21b).

9. Mecanum wheel vehicle according to any one of the preceding claims
**characterised in that**
a weight force of the chassis (5) is supportable on a substrate (U) both via the mecanum wheels (3) as well as via support means (6) of the mecanum wheel vehicle (1) provided in addition to the mecanum wheels (3) and **in that** to limit the weight force portion of the chassis (5), and any load to be carried thereby, to be supported on the substrate (U) via the mecanum wheel drives (2; 2a, 2b, 2c, d), the mecanum wheel drives (2; 2a, 2b, 2c, 2d), each having at least one mecanum wheel (3), are supported vis-à-vis the chassis (5) in a sprung manner by way of force storage means (4).

10. Mecanum wheel vehicle according to claim 9
**characterised in that**
the support means (6) comprise at least one load wheel, which is rotatable about a rotational axis (7) when operating the mecanum wheel vehicle (1) and which in the event of a change of direction of the mecanum wheel vehicle (1) is rotatable about an articulated axis (8) and/or **in that** the support means (6) have a rotatably arranged sphere for supporting on the substrate (U).

11. Mecanum wheel vehicle according to any one of claims 9 or 10
**characterised in that**
the force storage means (4) are designed in such a way that in the case of a chassis (5) which is not bearing a load, the support means (6) are arranged above a support plane defined by the mecanum wheels (3) and in the event of applying a load become lower, in particular together with the chassis (5) with a simultaneous increase in the spring loading of the force storage means (4).

12. Mecanum wheel vehicle according to claim 11 **characterised in that**
the distance between the support surface (9) formed by the support means (6) and the support plane defined by the mecanum wheels (3) is adjustable.

13. Mecanum wheel vehicle according to any of preceding claims 9 to 12
**characterised in that**
the support means (6) are not sprung with regard to the chassis (5) or are borne in a sprung manner with regard to the chassis (5) via support force storage means in such a way that a spring stiffness of the support force storage means is greater than the spring stiffness of the force storage means (4).

14. Mecanum wheel vehicle according to any one of preceding claims 9 to 13
**characterised in that**
a pre-tensioning of the force storage means (4) and/or a spring range of the force storage means (4) for setting the maximum weight portion to be supported by the mecanum wheel (3) on the substrate (U) is/are adjustable manually or by way of actuator means.

15. Mecanum wheel vehicle according to any one of preceding claims 9 to 14
**characterised in that** mecanum wheel vehicle (1) comprises measuring means for determining a weight force or a weight force portion of the chassis (5) and/or a load, and **in that** the measuring means are connected in a signal-conducting manner with control means (13) for controlling the actuator means for adjusting the pre-tensioning of the force storage means (4) and/or the spring range as a function of a signal sensor of the measuring means.

16. Method of operating a mecanum wheel vehicle (1) according to any one of the preceding claims
**characterised in that**
the distance between the first and second chassis section (21a and 21b) is adjusted along the first adjusting axis (E1) through the actuation by way of the control means (13) of at least one of the mecanum wheel drives (2; 2a, 2b, 2c, 2d) of the first chassis section (21a) and/or of second chassis section (21b).

## Revendications

1. Véhicule à roues mecanum (1), en particulier pour le transport d'une charge, comprenant un châssis de roulement (5) s'étendant le long d'un axe longitudinal (L) et d'un axe transversal (B) orienté perpendiculairement à celui-ci, avec au moins quatre entraînements à roues mecanum (2 ; 2a à 2d) qui peuvent être commandés par le biais de moyens de commande (13) pour réaliser un fonctionnement omnidirectionnel du véhicule à roues mecanum (1), le châssis de roulement (5) présentant une première portion de châssis de roulement (21a) avec au moins deux (2a, 2b) des entraînements à roues mecanum (2 ; 2a, 2b, 2c, 2d) et une deuxième portion de châssis de roulement (21b) avec au moins deux (2c, 2d) des entraînements à roues mecanum (2 ; 2a, 2b, 2c, 2d),
**caractérisé en ce que**
la première et la deuxième portion de châssis de roulement (21a, 21b) sont disposées de manière adjacente le long d'un premier axe de réglage (E1) et sont connectées l'une à l'autre mécaniquement avec une distance variable et **en ce que** la distance entre la première et la deuxième portion de châssis de roulement (21a, 21b) le long du premier axe de réglage (E1) peut être ajustée en commandant au moins l'un des entraînements à roues mecanum (2 ; 2a, 2b, 2c, 2d) de la première portion de châssis de roulement (21a) et/ou de la deuxième portion de châssis de roulement (21b) au moyen des moyens de commande (13).

2. Véhicule à roues mecanum selon la revendication 1,
**caractérisé en ce que**
le châssis de roulement (5) présente une troisième portion de châssis de roulement (21c) avec au moins deux (2a, 2b) des entraînements à roues mecanum (2 ; 2a, 2b, 2c, 2d) et une quatrième portion de châssis de roulement (21d) avec au moins deux (2b, 2d) des entraînements à roues mecanum (2 ; 2a, 2b, 2c, 2d), la troisième et la quatrième portion de châssis de roulement (21c, 21d) étant connectées l'une à l'autre mécaniquement avec une distance variable et la distance entre la troisième et la quatrième portion de châssis de roulement (21c, 21d) pouvant être ajustée le long d'un deuxième axe de réglage (E2) s'étendant suivant un certain angle, en particulier à angle droit, par rapport au premier axe de réglage (E1) par commande d'au moins l'un des entraînements à roues mecanum (2 ; 2a, 2b, 2c, 2d) de la troisième et/ou de la quatrième portion de châssis de roulement (21c, 21d) au moyen des moyens de commande (13).

3. Véhicule à roues mecanum selon la revendication 2,
**caractérisé en ce que**
la troisième et la quatrième portion de châssis de roulement (21c, 21d) comprennent à chaque fois, ou sont à chaque fois formées par, une portion partielle (22a à 22d) de la première portion de châssis de roulement (21a) présentant au moins un entraînement à roues mecanum (2 ; 2a, 2b, 2c, 2d) et une portion partielle (22 ; 22a, 22b, 22c, 22d) de la deuxième portion de châssis de roulement (21b) présentant un entraînement à roues mecanum (2 ; 2a, 2b, 2c, 2d) et adjacente, de préférence perpendiculairement, au premier axe de réglage (E1), et **en ce que** les au moins deux entraînements à roues mecanum (2a, 2c) de la troisième portion de châssis de roulement (21c) comprennent ou sont formées par au moins un entraînement à roues mecanum (2a) de la première portion de châssis de roulement (21c) et au moins un entraînement à roues mecanum (2c) de la deuxième portion de châssis de roulement (21b), et **en ce que** les au moins deux entraînements à roues mecanum (2b, 2d) de la quatrième portion de châssis de roulement (21d) comprennent, ou sont formés par, au moins un entraînement à roues mecanum (2b) de la première portion de châssis de roulement (21a) et au moins un entraînement à roues mecanum (2d) de la deuxième portion de châssis de roulement (21b).

4. Véhicule à roues mecanum selon la revendication 3,
**caractérisé en ce que** la troisième et la quatrième portion de châssis de roulement (21c, 21d) sont connectées l'une à l'autre directement avec une distance variable ou à une portion de châssis de liaison (23) uniquement par le biais des portions partielles (22a, 22b) de la première portion de châssis de roulement (21a) ou en variante (22c, 22d) de la deuxième portion de châssis de roulement (21b) ou **en ce que** la troisième et la quatrième portion de châssis de roulement (21c, 21d) sont connectées l'une à l'autre directement avec une distance variable ou à une portion de châssis de roulement de liaison (23) à la fois par le biais des portions partielles (22a, 22b ; 22c, 22d) de la première portion de châssis de roulement (21a) et de la deuxième portion de châssis de roulement (21b).

5. Véhicule à roues mecanum selon l'une quelconque des revendications précédentes,
**caractérisé en ce que**
le premier axe de réglage (E1) coïncide avec l'axe transversal (B) ou avec l'axe longitudinal (L).

6. Véhicule à roues mecanum selon l'une quelconque des revendications précédentes,
**caractérisé en ce que**
les entraînements à roues mecanum (2a à 2d) présentent à chaque fois au moins un moteur d'entraînement, notamment un moteur électrique, et au moins une roue mecanum (3) pouvant être entraînée par celui-ci, pouvant tourner autour d'un axe de rotation de roue mecanum (20) et portant au niveau de la périphérie extérieure une pluralité de rouleaux adjacents autour de l'axe de rotation de la roue mecanum (20) dans la direction périphérique, les axes de rotation de roues mecanum (20) des roues mecanum (3) étant orientés de préférence parallèlement à l'axe transversal (B) et perpendiculairement à l'axe longitudinal (L) .

7. Véhicule à roues mecanum selon l'une quelconque des revendications précédentes,
**caractérisé en ce que**
le véhicule à roues mecanum (1) présente des moyens de levage (15) pour faire varier une distance en hauteur orientée perpendiculairement à l'axe longitudinal (L) et à l'axe transversal (B) entre une surface d'appui (17) pour une charge, de préférence formée par une fourche de levage (16), et les entraînements à roues mecanum (2 ; 2a, 2b, 2c, 2d).

8. Véhicule à roues mecanum selon la revendication 7,
**caractérisé en ce que**
la surface d'appui (17), en particulier la fourche de levage (16), est disposée entre la première et la deuxième portion de châssis de roulement (21a, 21b) et la distance de la première et/ou de la deuxième portion de châssis de roulement (21a, 21b) à la surface d'appui (17) le long du premier axe de réglage (E1) peut être ajustée par commande des entraînements à roues mecanum (2 ; 2a, 2b, 2c, 2d) de la première et/ou de la deuxième portion de châssis de roulement (21a, 21b).

9. Véhicule à roues mecanum selon l'une quelconque des revendications précédentes,
**caractérisé en ce qu'**un poids du châssis de roulement (5) peut être supporté sur un support (U) à la fois par le biais des roues mecanum (3) ainsi que par le biais de moyens de support (6) du véhicule à roues mecanum (1) prévus en plus des roues mecanum (3) et **en ce que** les entraînements à roues mecanum (2 ; 2a, 2b, 2c, 2d) présentant à chaque fois au moins une roue mecanum (3), pour limiter la proportion de poids du châssis de roulement (5) devant être supportée par le biais des entraînements à roues mecanum (2 ; 2a, 2b, 2c, 2d) sur le support (U) et pour limiter une charge quelconque devant être portée par celui-ci, sont supportés sur ressort par rapport au châssis de roulement (5) à l'aide de moyens accumulateurs de force (4).

10. Véhicule à roues mecanum selon la revendication 9,
**caractérisé en ce que**
les moyens de support (6) présentent au moins une roue de charge pouvant tourner autour d'un axe de rotation (7) lors de la conduite du véhicule à roues mecanum (1), laquelle peut tourner autour d'un axe d'articulation (8) lors d'un changement de direction du véhicule à roues mecanum (1) et/ou en ce que les moyens de support (6) présentent une boule disposée de manière rotative pour le support sur le support (U).

11. Véhicule à roues mecanum selon l'une quelconque des revendications 9 ou 10,
**caractérisé en ce que**
les moyens accumulateurs de force (4) sont réalisés de telle sorte que les moyens de support (6), lorsque le châssis de roulement (5) n'est pas sollicité avec une charge, soient disposés au-dessus d'un plan de support défini par les roues mecanum (3) et, lors d'une sollicitation avec une charge, avec augmentation simultanée de la tension de ressort des moyens accumulateurs de force (4), descendent notamment conjointement avec le châssis de roulement (5).

12. Véhicule à roues mecanum selon la revendication 11,
**caractérisé en ce que**
la distance entre l'une des surfaces de support (9) formée par les moyens de support (6) et le plan de support défini par les roues mecanum (3) est ajustable.

13. Véhicule à roues mecanum selon l'une quelconque des revendications 9 à 12,
**caractérisé en ce que**
les moyens de support (6) ne sont pas supportés de manière élastique par rapport au châssis de roulement (5) ou sont supportés de manière élastique par rapport au châssis de roulement (5) par le biais de moyens accumulateurs de force de soutien de telle sorte qu'une rigidité de ressort des moyens accumulateurs de force de soutien soit supérieure à une rigidité de ressort des moyens accumulateurs de force (4).

14. Véhicule à roues mecanum selon l'une quelconque des revendications précédentes 9 à 13,
**caractérisé en ce**
**qu'**une précontrainte des moyens accumulateurs de force (4) et/ou une course de ressort des moyens accumulateurs de force (4) peuvent être ajustées manuellement ou au moyen de moyens d'actionneur pour ajuster la proportion de poids pouvant être supportée au maximum par les roues mecanum (3) sur le support (U).

15. Véhicule à roues mecanum selon l'une quelconque des revendications précédentes 9 à 14,
**caractérisé en ce que**
le véhicule à roues mecanum (1) présente des moyens de mesure pour déterminer un poids ou une proportion de poids du châssis de roulement (5) et/ou d'une charge, et **en ce que** les moyens de mesure sont connectés avec transmission de signaux à des moyens de commande (13) pour commander les moyens d'actionneur pour ajuster la précontrainte des moyens accumulateurs de force (4) et/ou de la course de ressort en fonction d'un signal de capteur des moyens de mesure.

16. Procédé pour faire fonctionner un véhicule à roues mecanum (1) selon l'une quelconque des revendications précédentes,
**caractérisé en ce que**
la distance entre la première et la deuxième portion de châssis de roulement (21a et 21b) est ajustée au moyen des moyens de commande (13) le long du premier axe de réglage (E1) par commande d'au moins l'un des entraînements à roues mecanum (2 ; 2a, 2b, 2c, 2d) de la première portion de châssis de roulement (21a) et/ou de la deuxième portion de châssis de roulement (21b).
